# EUROPEAN PATENT APPLICATION

(11) **EP 4 610 798 A1**
(43) Date of publication of application: **03.09.2025**
(21) Application number: 23898180.7
(22) Date of filing: 22.11.2023
(51) Int. Cl.: G06F 3/04842, G06F 3/0481, G06F 1/16, H04W 4/80, G06F 3/00, G06V 40/10

(54) **WEARABLE DEVICE FOR DISPLAYING MEDIA CONTENT ON BASIS OF GRIP FORM WITH RESPECT TO EXTERNAL OBJECT, AND METHOD FOR SAME**

(30) Priority: 01.12.2022 KR 20220166080
(71) Applicant: Samsung Electronics Co., Ltd., Suwon-si, Gyeonggi-do 16677 (KR)
(72) Inventor: CHO, Minkyung, Suwon-si Gyeonggi-do 16677 (KR); AHN, Stephanie, Suwon-si Gyeonggi-do 16677 (KR); LEE, Bona, Suwon-si Gyeonggi-do 16677 (KR)
(74) Representative: Nederlandsch Octrooibureau
(86) International application number: PCT/KR2023/018846
(87) International publication number: WO 2024/117649

(57) **Abstract**

A processor of a wearable device, according to one embodiment, can obtain a frame by using a camera while media content is displayed on display areas of displays. The processor can: identify, in the frame, the grip form of a body part with respect to an external object on the basis that the body part in contact with the external object is identified; and change the positions and sizes of the media content displayed on the respective displays in order to display the media content at a distance corresponding to the identified grip form. The present document can relate to a metaverse service for strengthening interconnectivity between a real object and a virtual object. For example, the metaverse service can be provided through a network based on fifth generation (5G) and/or sixth generation (6G).

## Description

### [Technical Field]

The present disclosure relates to a wearable device for displaying a media content based on a shape of a grip with respect to an external object, and a method for same.

### [Background Art]

In order to provide an enhanced user experience, an electronic device that provides an augmented reality (AR) service displaying information generated by a computer in connection with an external object in the real-world is being developed. The electronic device may be a wearable device that may be worn by a user. For example, the electronic device may be AR glasses and/or a head-mounted device (HMD).

### [Disclosure]

### [Technical Solution]

According to an embodiment, a wearable device may comprise a camera, a display, memory storing instructions, and a processor. The instructions, when executed by the processor, may be configured to cause the wearable device to obtain, in a state displaying a media content in a display area of the display, a frame using the camera. The instructions, when executed by the processor, may be configured to cause the wearable device to identify, based on identifying a body part contacted to an external object in the frame, a shape of a grip of the body part with respect to the external object. The instructions, when executed by the processor, may be configured to cause the wearable device to change a distance of the media content displayed spaced apart from the wearable device by selecting one of a first distance or a second distance shorter than the first distance according to the shape of the grip. According to an embodiment, the wearable device may change a distance of the media content in the display area based on the shape of the grip.

According to an embodiment, a method of a wearable device may comprise obtaining a frame using the camera, in a state displaying a media content in a display area of a display of the wearable device. The method may comprise, identifying, based on identifying a body part contacted to an external object in the frame, a shape of a grip of the body part with respect to the external object. The method may comprise changing a distance of the media content displayed spaced apart from the wearable device by selecting one of a first distance or a second distance shorter than the first distance according to the shape of the grip.

According to an embodiment, a wearable device may comprise a camera, a display, memory storing instructions, and a processor. The instructions, when executed by the processor, may be configured to cause the wearable device to obtain a frame using the camera. The instructions, when executed by the processor, may be configured to cause the wearable device to identify, based on identifying a body part contacted to an external object in the frame, a shape of a grip of the body part with respect to the external object. The instructions, when executed by the processor, may be configured to cause the wearable device to, based on identifying a first shape of a grip, display a plurality of media contents according to a first distance corresponding to the first shape of the grip in a portion of the display area. The instructions, when executed by the processor, may be configured to cause the wearable device to, based on identifying a second shape of a grip distinguished from the first shape of the grip, display, one of the plurality of media contents using a second distance shorter than the first distance.

According to an embodiment, a method of the wearable device may comprise obtaining a frame using a camera of the wearable device. The method may comprise identifying, based on identifying a body part contacted to an external object in the frame, a shape of a grip of the body part with respect to the external object. The method may comprise, based on identifying a first shape of a grip, displaying a plurality of media contents according to a first distance corresponding to the first shape of the grip in a portion of the display area. The method may comprise, based on identifying a second shape of a grip distinguished from the first shape of the grip, displaying, one of the plurality of media contents using a second distance shorter than the first distance.

According to an embodiment, a wearable device may comprise a camera, displays respectively facing two eyes of a user wearing the wearable device, memory storing instructions, and a processor. The instructions, when executed by the processor, may be configured to cause the wearable device to obtain, in a state displaying a media content in the displays, a frame using the camera. The instructions, when executed by the processor, may be configured to cause the wearable device to identify, based on identifying a body part contacted to an external object in the frame, a shape of a grip of the body part with respect to the external object. The instructions, when executed by the processor, may be configured to cause the wearable device to change, to display the media content at a distance corresponding to the identified shape of the grip, positions and sizes of the media content respectively displayed in the displays.

In an embodiment, a method of a wearable device may be provided. The method may comprise obtaining a frame using a camera of the wearable device. The method may comprise, identifying, based on identifying the body part contacted to an external object in the frame, a shape of a grip of the body part with respect to the external object. The method may comprise, based on identifying a first shape of a grip, adjusting, to display a plurality of media contents according to a first distance corresponding to the first shape of the grip, positions and sizes of the plurality of media contents displayed in each of displays respectively facing two eyes of a user wearing the wearable device. The method may comprise, based on identifying a second shape of a grip distinguished from the first shape of the grip, adjusting, to display one of the plurality of media contents using a second distance shorter than the first distance, positions and sizes of a media content displayed in each of the displays.

In an embodiment, a non-transitory computer readable storage media including instructions may be provided. The instructions, when executed by a processor of a wearable device including a camera and displays respectively facing two eyes of a user wearing the wearable device, may cause the wearable device to obtain, in a state displaying a media content in the displays, a frame using the camera. The instructions, when executed by the processor, may cause the wearable device to identify, based on identifying a body part contacted to an external object in the frame, a shape of a grip of the body part with respect to the external object. The instructions, when executed by the processor, may cause the wearable device to change, to display the media content at a distance corresponding to the identified shape of the grip, positions and sizes of the media content respectively displayed in the displays.

### [Description of the Drawings]

FIG. 1 illustrates an example of an operation in which a wearable device recognizes an external object and a body part contacted to the external object according to an embodiment.
FIG. 2 illustrates an example of a block diagram of a wearable device according to an embodiment.
FIG. 3A illustrates an example of a perspective view of a wearable device according to an embodiment.
FIG. 3B illustrates an example of one or more hardware positioned in a wearable device according to an embodiment.
FIGS. 4A to 4B illustrate an example of an exterior of a wearable device according to an embodiment.
FIG. 5 illustrates an example of a flowchart of a wearable device according to an embodiment.
FIG. 6 illustrates an example of an operation in which a wearable device moves a plurality of media contents based on a shape of a grip of a body part with respect to an external object according to an embodiment.
FIG. 7 illustrates an example of an operation of changing a media content based on a motion of an external object by a wearable device according to an embodiment.
FIG. 8 illustrates an example of an operation in which a wearable device changes a media content based on an external object contacted to an external electronic device according to an embodiment.
FIG. 9 illustrates an example of a signal flowchart of a wearable device and an external electronic device according to an embodiment.
FIGS. 10A to 10B illustrate an example of an operation in which a wearable device displays a user interface (UI) for controlling a media content based on a shape of a grip of a body part with respect to an external object.
FIG. 11 illustrates an example of an operation in which a wearable device displays a screen based on a motion of an external object according to an embodiment.
FIG. 12 is an exemplary diagram of a network environment associated with a metaverse service.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

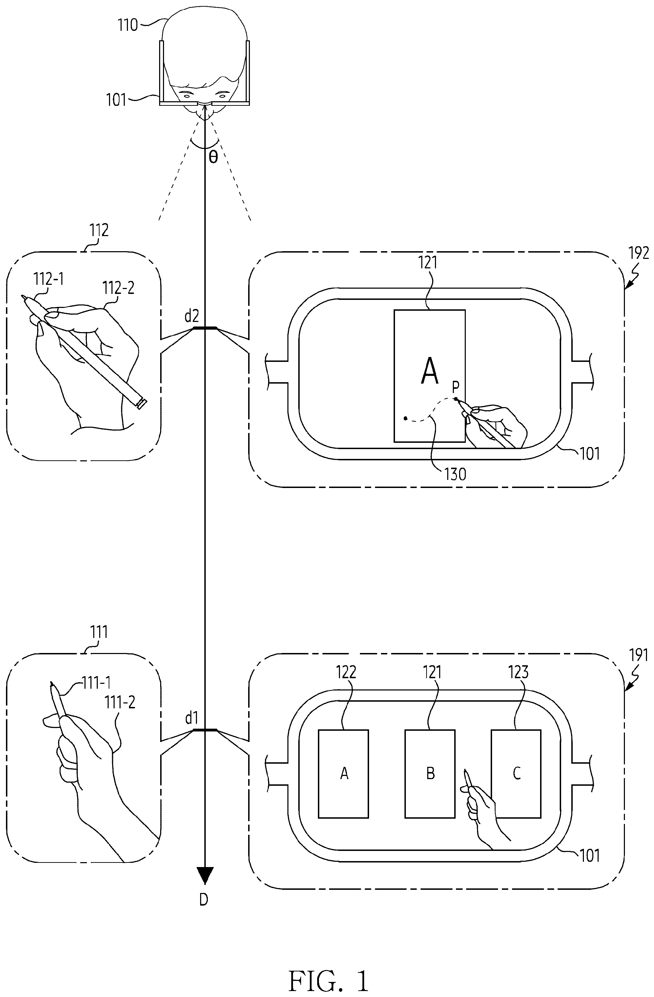

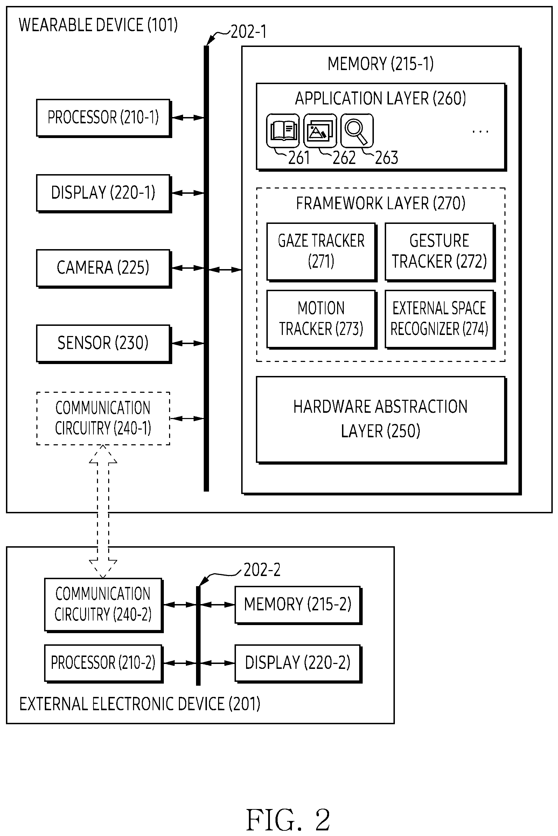

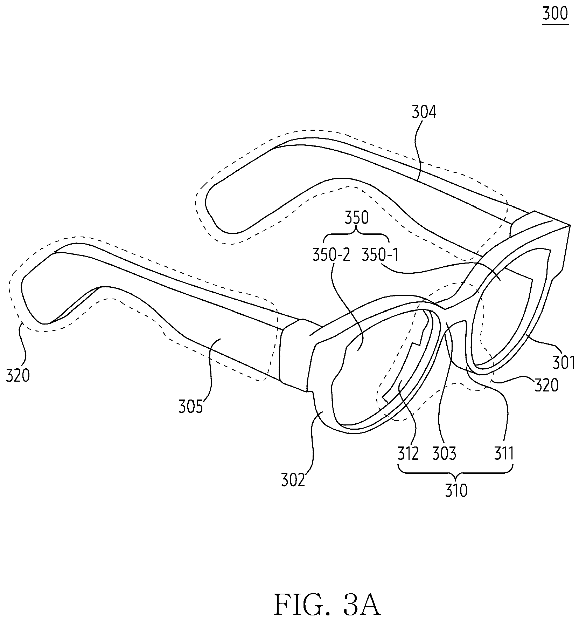

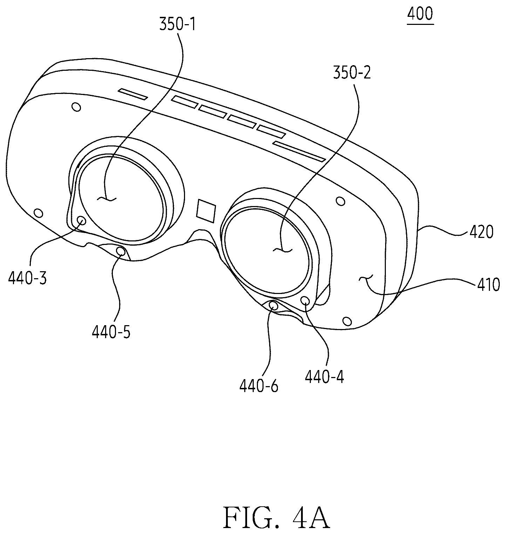

FIG. 1 illustrates an example of an operation in which a wearable device 101 recognizes an external object and a body part contacted to the external object according to an embodiment. In an embodiment of FIG. 1, the wearable device 101 may include a head-mounted display (HMD) wearable on a head of a user 110. Although an external appearance of the wearable device 101 having a shape of glasses is illustrated, an embodiment is not limited thereto. An example of a structure of the wearable device 101 wearable on the head of the user 110 will be described with reference to FIGS. 3A to 3B and/or 4A to 4B. One or more hardware included in the wearable device 101 will be exemplarily described with reference to FIG. 2.

According to an embodiment, the wearable device 101 may execute a function associated with a video see-through (VST) and/or a virtual reality (VR). Referring to FIG. 1, in a state that the user 110 wears the wearable device 101, the wearable device 101 may include a housing covering eyes of the user 110. The wearable device 101 may include a display positioned on a first surface facing the eyes in a state. The wearable device 101 may include a camera positioned on a second surface opposite to the first surface. The wearable device 101 may obtain frames including ambient light using the camera. The wearable device 101 may output the frames in the display positioned on the first surface, so that the user 110 is enabled to perceive the ambient light through the display. A display area of the display positioned on the first surface may be formed by one or more pixels included in the display. The wearable device 101 may synthesize a virtual object in the frames outputted through the display, so that the user 110 is enabled to perceive the virtual object along with a real object recognized by the ambient light.

According to an embodiment, the wearable device 101 may execute a function associated with an augmented reality (AR) and/or a mixed reality (MR). In an embodiment of FIG. 1, in the state that the user 110 wears the wearable device 101, the wearable device 101 may include at least one lens positioned adjacent to the eyes of the user 110. The wearable device 101 may couple the ambient light passing through the lens with light emitted from the display of the wearable device 101. The display area of the display may be formed in the lens through which the ambient light passes. Since the wearable device 101 couples the ambient light and the light emitted from the display, the user 110 may view an image in which a real object recognized by the ambient light and a virtual object formed by the light emitted from the display are mixed.

According to an embodiment, the wearable device 101 may display a virtual object together with the real object included in the display area. In state of that the user 110 wears the wearable device 101, the user 110 may view an image in which the real object and the virtual object are mixed through the display area. For example, the wearable device 101 may display a combination of the real object (e.g., a hand of the user 110) and the virtual object (e.g., a virtual object floating adjacent to the hand of the user 110) to the user 110 wearing the wearable device 101. The wearable device 101 may provide the user 110 with a user experience associated with the AR, the MR, and/or the VST, based on the combination. Referring to FIG. 1, according to an embodiment, different states 191 and 192 in which the wearable device 101 provides the user 110 with the user experience associated with the AR, the MR and/or the VST based on a frame (e.g., frames 111 and 112) obtained using a camera are illustrated.

According to an embodiment, the wearable device 101 may obtain a frame for at least a portion of a field-of-view (FoV) of the user 110 wearing the wearable device 101, by using the camera of the wearable device 101. Referring to FIG. 1, exemplary frames 111 and 112 obtained using the camera by the wearable device 101 are illustrated. The wearable device 101 may segment the external object in the frame obtained using the camera. For example, the wearable device 101 may identify a category of a subject captured in the frame 111 based on one or more feature points and/or an artificial neural network included in the frame 111. For example, the wearable device 101 may identify an external object 111-1 included in a preset category including a pen in the frame 111.

According to an embodiment, the wearable device 101 may segment a body part 111-2 contacted to the external object 111-1 in the frame 111 based on identifying the external object 111-1 having a shape of a pen, such as a stylus and/or a digitizer. The body part 111-2 may include at least a portion of the hand. For example, the wearable device 101 may identify a grip form of the body part 111-2 with respect to the external object 111-1 in the frame 111 based on identifying the body part 111-2 contacted to the external object 111-1. According to an embodiment, the wearable device 101 may control one or more virtual objects shown to the user 110 through the display area based on the shape of the grip identified in the frame 111. The one or more virtual objects may include a media content stored in the wearable device 101, such as a document, an image, and/or a video. The one or more virtual objects may include a screen (or a window) provided from an application executed by the wearable device 101.

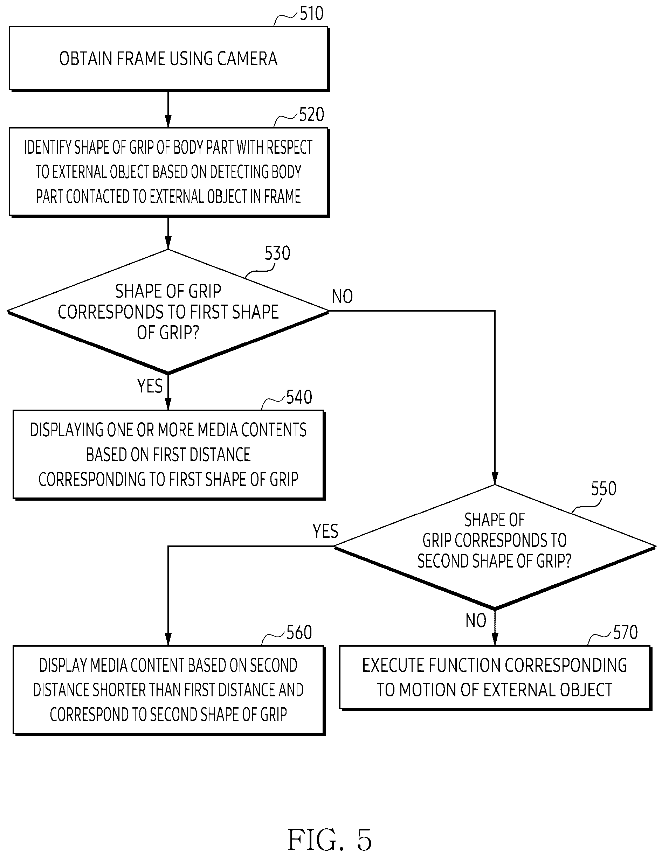

According to an embodiment, the wearable device 101 may change a mode for displaying at least one media content based on a shape and/or a posture of a hand holding a stylus and/or a pen. The mode may be distinguished by at least one of the number of media contents displayed through the wearable device 101, a state of the media content, and/or a distance in which the media content is spaced apart from the wearable device. For example, the wearable device 101 may switch to the first state 191 for viewing a plurality media contents 121, 122, and 123 based on identifying a first shape of a grip of the body part 111-2 with respect to the external object 111-1, illustrated in the frame 111. Although three media contents 121, 122, and 123 are exemplarily illustrated, an embodiment is not limited thereto. Referring to the frame 111, a shape of a grip of the body part 111-2 that points an end exposed to the outside among both ends of the external object 111-1 in a direction is exemplarily illustrated. For example, the wearable device 101 may switch to the second state 192 for selectively displaying one media content 121 among the plurality of media contents 121, 122, and 123, based on identifying the second shape of a grip of a body part 112-2 with respect to the external object 112-1 in a frame 112. The shape of the grip of the body part 112-2 grasping the external object 112-1 for handwritings illustrated in the frame 112 is exemplarily illustrated. According to an embodiment, an operation in which the wearable device 101 switches to one of the states 191 and 192 based on a shape of a grip will be described with reference to FIG. 5.

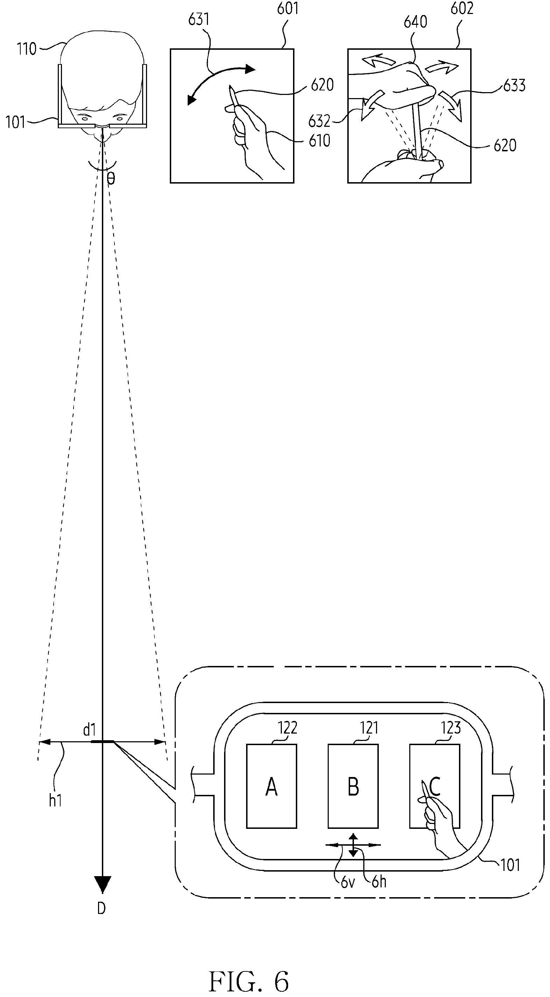

Referring to FIG. 1, the wearable device 101 may display the plurality of media contents 121, 122, and 123 spaced apart from the wearable device 101 according to a first distance d1, in the first state 191 in which the first shape of the grip is identified based on the frame 111. The wearable device 101 may display the plurality of media contents 121, 122, and 123 spaced apart by the first distance d1 along a direction D perpendicular to the display area. Displaying the plurality of media contents 121, 122, and 123 based on the first distance d1 by the wearable device 101 may include displaying the plurality of media contents 121, 122, and 123 based on a size (e.g., a size of at least one of the plurality of media contents 121, 122, and 123 shown through the display) corresponding to the first distance d1, a depth value, and/or a binocular parallax. For example, the wearable device 101 may adjust a difference between positions of the plurality of media contents 121, 122, and 123 visible from each of the two eyes of the user 110 wearing the wearable device 101 based on the binocular parallax based on the first distance d1. Based on the binocular parallax, the user 110 may recognize the plurality of media contents 121, 122, and 123 floating on the first distance d1. The first distance d1 may be set to a distance (e.g., approximately 60 cm) that exceeds a distance that may be reached by the hand of the user 110. An example of an operation performed by the wearable device 101 based on a shape of a grip, in the first state 191, will be described with reference to FIG. 6.

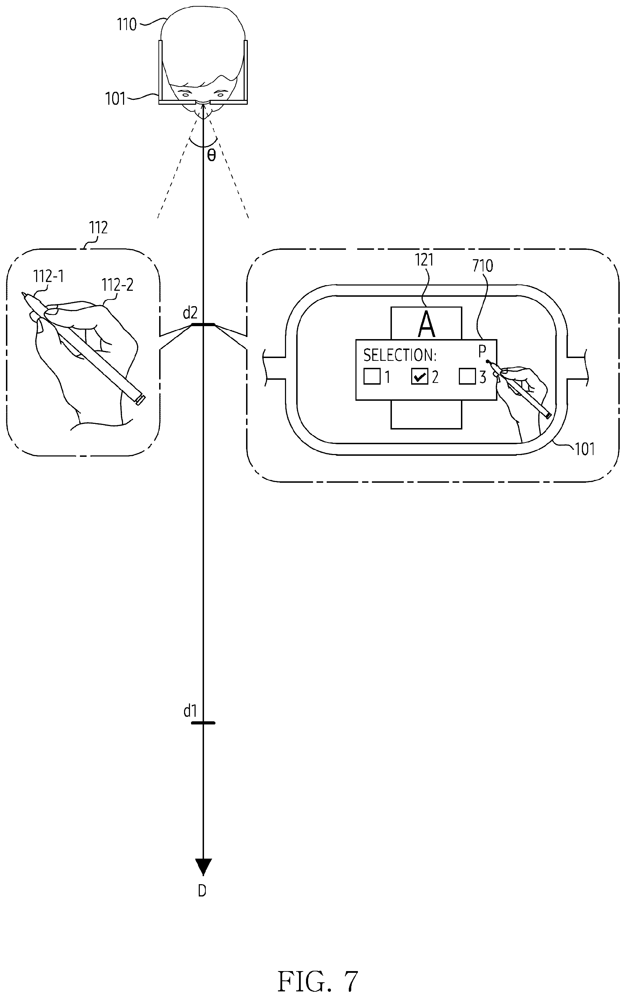

Referring to FIG. 1, in the second state 192 in which a second shape of a grip is identified based on the frame 112, the wearable device 101 may display one media content 121 spaced apart from the wearable device 101 according to a second distance d2. The second distance d2 may be shorter than the first distance d1. The wearable device 101 may display the media content 121 based on a size (e.g., a size of at least one of the plurality of media contents 121, 122, and 123 viewed through the display) corresponding to the second distance d2, a depth value, and/or binocular parallax. For example, the wearable device 101 may provide the user 110 with a user experience in which the media content 121 floats on the second distance d2 using the binocular parallax based on the second distance d2. The second distance d2 may be set to a distance (e.g., approximately 45 cm) shorter than or equal to a distance that the hand of the user 110 may reach. In the second state 192, the wearable device 101 may execute a function for editing the media content 121. For example, the wearable device 101 may display a visual object (e.g., a stroke) representing a path 130 on the media content 121 based on the path 130 of an end P of the external object. An example of an operation performed by the wearable device 101 based on a shape of a grip in the second state 192 will be described with reference to FIGS. 7 to 9.

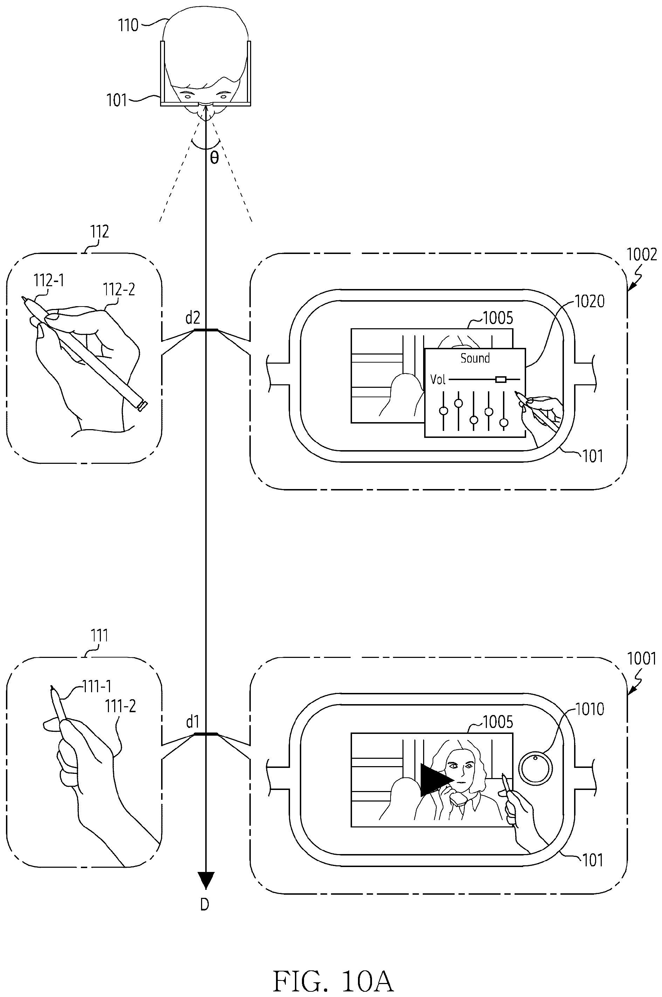

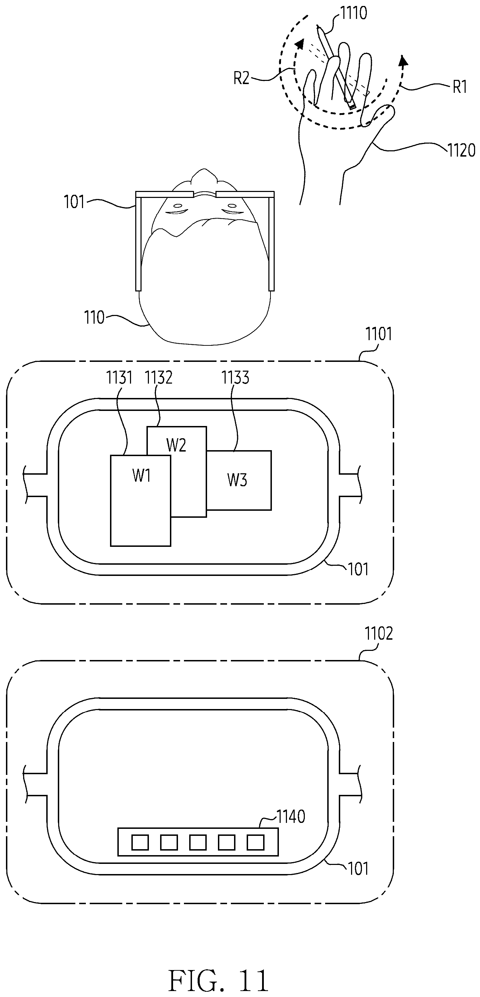

Although, a state in which the wearable device 101 switches based on a shape of a grip is not limited to the first state 191 and/or the second state 192 of FIG. 1. The wearable device 101 may switch between different states distinguished by the shape of the grip based on an application executed by the wearable device 101. An example of states in which the wearable device 101 switches by the shape of the grip will be described with reference to FIGS. 10A to 10B. The shape of the grip recognized by the wearable device 101 is not limited to examples of frames 111 and 112, and an example of the shape of the grip recognized by the wearable device 101 is described with reference to FIGS. 6 and/or 11.

As described above, according to an embodiment, the wearable device 101 may obtain a frame using the camera in a state of displaying the media content on the display area. The wearable device 101 may change a distance of the media content displayed spaced apart from the wearable device 101 by selecting one of the first distance d1 and the second distance d2 according to the shape of the grip identified in the frame. The wearable device 101 may execute a function for viewing the plurality of media contents while displaying the media content based on the first distance d1 exceeding the second distance d2, such as in the first state 191. The wearable device 101 may execute a function for editing the media content while displaying the media content based on the second distance d2 shorter than the first distance d1, such as the second state 192.

Hereinafter, one or more hardware included in the wearable device 101 according to an embodiment will be described with reference to FIG. 2.

FIG. 2 illustrates an example of a block diagram of a wearable device 101 according to an embodiment. The wearable device 101 of FIG. 2 may include the wearable device 101 of FIG. 1.

According to an embodiment, the wearable device 101 may include at least one of a processor 210-1, memory 215-1, a display 220-1, a camera 225, a sensor 230, a microphone 235, or communication circuitry 240-1. The processor 210-1, the memory 215-1, the display 220-1, the camera 225, the sensor 230, the microphone 235, and the communication circuitry 240-1 may be electronically and/or operably coupled with each other by an electronical component such as a communication bus 202-1. In the following, the hardware being operatively coupled may mean that a direct connection, or an indirect connection between the hardware is established either wired or wireless, such that second hardware is controlled by first hardware among the hardware. Although illustrated based on different blocks, an embodiment is not limited thereto, and a portion (e.g., at least a portion of the processor 210-1, the memory 215-1, and the communication circuitry 240-1) of the hardware of FIG. 2 may be included in a single integrated circuit such as a system on a chip (SoC). A type and/or the number of hardware included in the wearable device 101 is not limited as illustrated in FIG. 2. For example, the wearable device 101 may include only a portion of the hardware component illustrated in FIG. 2.

In an embodiment, the processor 210-1 of the wearable device 101 may include hardware for processing data based on one or more instructions. The hardware for processing data may include, for example, an arithmetic and logic unit (ALU), a floating point unit (FPU), a field programmable gate array (FPGA), a central processing unit (CPU), and/or an application processor (AP). The processor 210-1 may have a structure of a single-core processor, or may have a structure of a multi-core processor such as a dual core, a quad core, or a hexa core.

In an embodiment, the memory 215-1 of the wearable device 101 may include a hardware component for storing data and/or an instruction inputted and/or outputted to the processor 210-1 of the wearable device 101. The memory 215-1 may include, for example, volatile memory such as a random-access memory (RAM) and/or non-volatile memory such as a read-only memory (ROM). The volatile memory may include, for example, at least one of a dynamic RAM (DRAM), a static RAM (SRAM), a Cache RAM, and a pseudo SRAM (PSRAM). The non-volatile memory may include, for example, at least one of a programmable ROM (PROM), erasable PROM (EPROM), an electrically erasable PROM (EEPROM), a flash memory, a hard disk, a compact disk, a solid state drive (SSD), and an embedded multi media card (eMMC).

In an embodiment, the display 220-1 of the wearable device 101 may output visualized information (e.g., a screen of FIGS. 1, 6 to 8, 10A to 10B, and 11) to a user (e.g., the user 110 of FIG. 1). For example, the display 220-1 may output visualized information to the user by being controlled by the processor 210-1 that includes a circuit such as a graphic processing unit (GPU). The display 220-1 may include a flat panel display (FPD) and/or electronic paper. The FPD may include a liquid crystal display (LCD), a plasma display panel (PDP), and/or one or more light emitting diodes (LEDs). The LED may include an organic LED (OLED). The display 220-1 of FIG. 2 may include at least one display 350 to be described later with reference to FIGS. 3A to 3B and/or 4A to 4B.

In an embodiment, the camera 225 of the wearable device 101 may include one or more optical sensors (e.g., a charged coupled device (CCD) sensor, and a complementary metal oxide semiconductor (CMOS) sensor) that generate an electrical signal indicating a color and/or brightness of light. A plurality of optical sensors included in the camera 225 may be positioned in a shape of a 2 dimensional array. The camera 225 may generate 2 dimensional frame data corresponding to light reaching the optical sensors of the 2 dimensional array by obtaining electrical signals of each of the plurality of optical sensors substantially simultaneously. For example, photo data captured using the camera 225 may mean a two dimensional frame data obtained from camera 225. For example, video data captured using the camera 225 may mean a sequence of a plurality of two dimensional frame data obtained from the camera 225 according to a frame rate. The camera 225 may further include a flash light, positioned toward a direction in which the camera 225 receives light, for outputting light toward the direction. Although the camera 225 is illustrated based on a single block, the number of cameras 225 included in the wearable device 101 is not limited to an embodiment. The wearable device 101 may include one or more cameras, such as one or more cameras 340 to be described below with reference to FIGS. 3A to 3B and/or 4A to 4B.

According to an embodiment, the sensor 230 of the wearable device 101 may generate electronic information that may be processed by the processor 210-1 and/or the memory 215-1 of the wearable device 101 from non-electronic information associated with the wearable device 101. The information may be referred to as sensor data. The sensor 230 may include a global positioning system (GPS) sensor for detecting a geographic location of the wearable device 101, an image sensor, an illumination sensor, and/or a time-of-flight (ToF) sensor, and an inertial measurement unit (IMU) for detecting a physical motion of the wearable device 101.

In an embodiment, the communication circuitry 240-1 of the wearable device 101 may include a hardware component for supporting transmission and/or reception of an electrical signal between the wearable device 101 and an external electronic device 201. The communication circuitry 240-1 may include, for example, at least one of a MODEM, an antenna, and an optic/electronic (O/E) converter. The communication circuitry 240-1 may support the transmission and/or the reception of the electrical signal based on various types of protocols such as an ethernet, a local area network (LAN), a wide area network (WAN), a wireless fidelity (WiFi), a Bluetooth, a bluetooth low energy (BLE), a ZigBee, a long term evolution (LTE), a 5G new radio (NR), and/or a 6G.

Although not illustrated, according to an embodiment, the wearable device 101 may include an output means for outputting information in a shape other than a visualized shape. For example, the wearable device 101 may include a speaker for outputting an acoustic signal. For example, the wearable device 101 may include a motor for providing haptic feedback based on a vibration.

Referring to an embodiment of FIG. 2, in the memory 215-1 of the wearable device 101, one or more instructions (or commands) indicating computation and/or an operation to be performed by the processor 210-1 of the wearable device 101 on data may be stored. A set of one or more instructions may be referred to as a program, a firmware, an operating system, a process, a routine, a sub-routine, and/or an application. Hereinafter, an application being installed in the electronic device (e.g., the wearable device 101) may mean that one or more instructions provided in a shape of an application are stored in the memory 215-1, and the one or more applications are stored in an executable format (e.g., a file having a preset extension by the operating system of the wearable device 101) by the processor of the electronic device.

Referring to FIG. 2, the programs installed in the wearable device 101 may be classified into one of different layers, including an application layer 260, a framework layer 270, and/or a hardware abstraction layer (HAL) 250, based on a target. For example, programs (e.g., a driver) designed to target hardware (e.g., the display 220-1, the camera 225, the sensor 230, and/or the communication circuitry 240-1) of the wearable device 101 may be classified in the hardware abstraction layer 250. For example, programs (e.g., a gaze tracker 271, a gesture tracker 272, a motion tracker 273, and/or an external space recognizer 274) designed to target at least one of the hardware abstraction layer 250 and/or the application layer 260 may be classified in the framework layer 270. Programs classified as the framework layer 270 may provide an application programming interface (API) that is executable based on another program.

Referring to FIG. 2, a program designed to target a user (e.g., the user 110 of FIG. 1) who controls the wearable device 101 may be classified in the application layer 260. For example, a program classified as the application layer 260 may include at least one of a word processor application 261 to view and/or edit a document, a video player application 262 to play an image and/or a video, and a browsing application 263 to view a media content stored in the memory 215-1. An embodiment is not limited thereto. For example, the program classified as the application layer 260 may cause an execution of a function supported by the programs classified as the framework layer 270 by calling the API.

Referring to FIG. 2, the wearable device 101 may process information associated with a gaze of the user wearing the wearable device 101 based on an execution of the gaze tracker 271 in the framework layer 270. For example, the wearable device 101 may obtain an image including eyes of the user from the camera 225. The wearable device 101 may identify a direction of the gaze of the user, based on a position and/or a direction of pupils included in the image.

Referring to FIG. 2, the wearable device 101 may identify the motion of the preset body part including the hand based on an execution of the gesture tracker 272 in the framework layer 270. For example, the wearable device 101 may obtain frames including the body part from the camera 225. The wearable device 101 may identify a gesture performed by the preset body part based on the motion and/or a posture of the preset body part indicated by the frames.

Referring to FIG. 2, the wearable device 101 may identify the motion of the wearable device 101 based on an execution of the motion tracker 273 in the framework layer 270. In a state that the wearable device 101 is worn by the user, the motion of the wearable device 101 may be associated with a motion of a head of the user. For example, the wearable device 101 may identify a direction of the wearable device 101 that substantially matches a direction of the head, as in the direction D of FIG. 1. The wearable device 101 may identify the motion of the wearable device 101 based on sensor data of the sensor 230 including the IMU.

Referring to FIG. 2, the wearable device 101 may obtain information on an external space that includes the wearable device 101 or is adjacent to the wearable device 101, based on an execution of the external space recognizer 274 in the framework layer 270. The wearable device 101 may obtain the information using the camera 225 and/or the sensor 230. Referring to FIG. 2, in a state that the external space recognizer 274 is executed, the wearable device 101 may identify a virtual space mapped to the external space based on the information obtained by the external space recognizer 274. The wearable device 101 may identify a position and/or a direction of the wearable device 101 in the external space based on the execution of the external space recognizer 274. For example, the wearable device 101 may perform a simultaneous localization and mapping (SLAM) to recognize recognition of the external space and the position of the wearable device 101 in the external space based on the execution of the external space recognizer 274 and/or the motion tracker 273.

According to an embodiment, the wearable device 101 may identify an external object and a body part contacted to the external object in a frame (e.g., the frames 111 and 112 of FIG. 1) obtained from the camera 225 based on the execution of the gesture tracker 272. The wearable device 101 identifying the external object and the body part may identify a shape of a grip of the body part with respect to the external object based on the execution of the gesture tracker 272. For example, the wearable device 101 may identify the shape of the grip based on identifying an external object included in a preset category including a pen in the frame. The wearable device 101 may move a size, a depth value, and/or a binocular parallax of a media content displayed through the display 220-1 to one of preset distances (e.g., the first distance d1 and/or the second distance d2 of FIG. 1) based on the shape of the grip. For example, while displaying one or more media contents based on the first distance, the wearable device 101 may move the one or more media contents to the second distance in response to identifying a shape of a grip corresponding to the second distance.

According to an embodiment, the wearable device 101 may communicate with the external electronic device 201 using the communication circuitry 240-1. The wearable device 101 may identify a motion of the external object by communicating with the external electronic device 201. Referring to FIG. 2, the external electronic device 201 may include at least one of a processor 210-2, memory 215-2, a display 220-2, or communication circuitry 240-2. The processor 210-2, the memory 215-2, the display 220-2, and the communication circuitry 240-2 may be connected by an electronical component such as a communication bus 202-2. Each of the processor 210-2, the memory 215-2, the display 220-2, and the communication circuitry 240-2 of the external electronic device 201 may correspond to each of the processor 210-1, the memory 215-1, the display 220-1, and the communication circuitry 240-1 of the wearable device 101. Hereinafter, in order to reduce redundancy in a description, among a description of the processor 210-2, the memory 215-2, the display 220-2, and the communication circuitry 240-2, a description overlapping the processor 210-1, the memory 215-1, the display 215-1, and the communication circuitry 240-1 of the wearable device 101 may be omitted.

According to an embodiment, the wearable device 101 may identify an external object contacted to the display 220-2 of the external electronic device 201 using the communication circuitry 240-1 and/or the camera 225. For example, the wearable device 101 may identify the external object contacted to the display 220-2 in a frame obtained from the camera 225. For example, the wearable device 101 may receive information on a position of the external object contacted on the display 220-2 from the external electronic device 201 through the communication circuitry 240-1. The wearable device 101 may change at least one media content based on the position and/or a path of the external object contacted to the display 220-2. In a state of communicating with the external electronic device 201, the wearable device 101 may display the at least one media content in the display 220-1. In the state, the wearable device 101 may transmit information for displaying the at least one media content to the external electronic device 201 through the display 220-2.

As described above, according to an embodiment, the wearable device 101 may identify a body part contacted to an external object in a frame obtained using the camera 225. The wearable device 101 may selectively execute one of different functions supported by an application executed by the wearable device 101 based on a distance matched to a shape of a grip of the body part with respect to the external object. For example, the wearable device 101 may move the media content based on the distance matching the shape of the grip. With the movement of the media content, the wearable device 101 may change the number of media contents visible in a display area, such as the first state 191 to the second state 192 of FIG. 1. The movement of the media content by the wearable device 101 may cause at least one of a change in a binocular parallax, a depth value, and/or a size of the media content.

Hereinafter, according to an embodiment, an example of a form factor of the wearable device 101 will be described using FIGS. 3A to 3B and/or 4A to 4B.

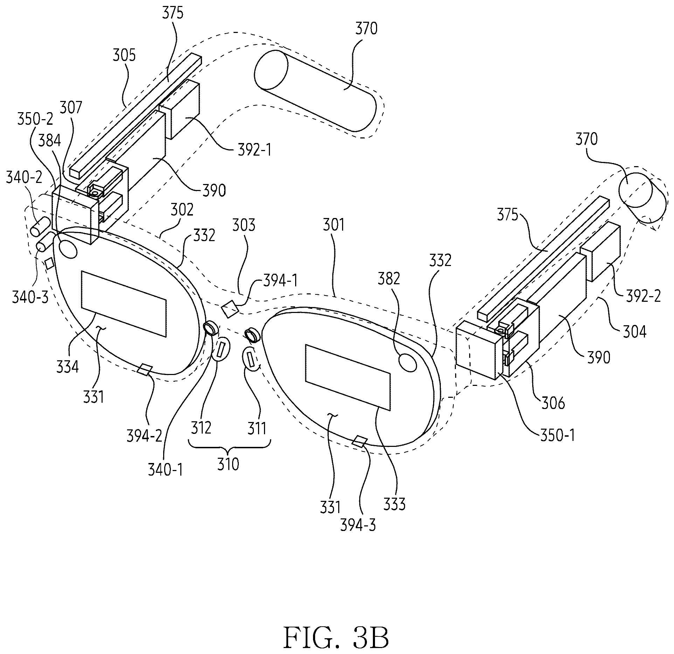

FIG. 3A illustrates an example of a perspective view of a wearable device according to an embodiment. FIG. 3B illustrates an example of one or more hardware positioned in a wearable device 300 according to an embodiment. The wearable device 300 of FIGS. 3A to 3B may include the wearable device 101 of FIGS. 1 to 2. As shown in FIG. 3A, according to an embodiment, the wearable device 300 may include at least one display 350 and a frame supporting the at least one display 350.

According to an embodiment, the wearable device 300 may be wearable on a portion of the user's body. The wearable device 300 may provide augmented reality (AR), virtual reality (VR), or mixed reality (MR) combining the augmented reality and the virtual reality to a user wearing the wearable device 300. For example, the wearable device 300 may output a virtual reality image through at least one display 350, in response to a user's preset gesture obtained through a motion recognition camera 340-2 of FIG. 3B.

According to an embodiment, the at least one display 350 in the wearable device 300 may provide visual information to a user. The at least one display 350 may include the display 220-1 of FIG. 2. For example, the at least one display 350 may include a transparent or translucent lens. The at least one display 350 may include a first display 350-1 and/or a second display 350-2 spaced apart from the first display 350-1. For example, the first display 350-1 and the second display 350-2 may be disposed at positions corresponding to the user's left and right eyes, respectively.

Referring to FIG. 3B, the at least one display 350 may form a display area on the lens to provide a user wearing the wearable device 300 with visual information included in ambient light passing through the lens and other visual information distinct from the visual information. The lens may be formed based on at least one of a fresnel lens, a pancake lens, or a multi-channel lens. The display area formed by the at least one display 350 may be formed on the second surface 332 of the first surface 331 and the second surface 332 of the lens. When the user wears the wearable device 300, ambient light may be transmitted to the user by being incident on the first surface 331 and being penetrated through the second surface 332. For another example, the at least one display 350 may display a virtual reality image to be combined with a reality screen transmitted through ambient light. The virtual reality image outputted from the at least one display 350 may be transmitted to eyes of the user, through one or more hardware (e.g., optical devices 382 and 384, and/or at least one waveguides 333 and 334) included in the wearable device 300.

According to an embodiment, the wearable device 300 may include waveguides 333 and 334 that transmit light transmitted from the at least one display 350 and relayed by the at least one optical device 382 and 384 by diffracting to the user. The waveguides 333 and 334 may be formed based on at least one of glass, plastic, or polymer. A nano pattern may be formed on at least a portion of the outside or inside of the waveguides 333 and 334. The nano pattern may be formed based on a grating structure having a polygonal or curved shape. Light incident to an end of the waveguides 333 and 334 may be propagated to another end of the waveguides 333 and 334 by the nano pattern. The waveguides 333 and 334 may include at least one of at least one diffraction element (e.g., a diffractive optical element (DOE), a holographic optical element (HOE)), and a reflection element (e.g., a reflection mirror). For example, the waveguides 333 and 334 may be disposed in the wearable device 300 to guide a screen displayed by the at least one display 350 to the user's eyes. For example, the screen may be transmitted to the user's eyes through total internal reflection (TIR) generated in the waveguides 333 and 334.

According to an embodiment, the wearable device 300 may analyze an object included in a real image collected through a photographing camera 340-1, combine with a virtual object corresponding to an object that become a subject of augmented reality provision among the analyzed object, and display on the at least one display 350. The virtual object may include at least one of text and images for various information associated with the object included in the real image. The wearable device 300 may analyze the object based on a multi-camera such as a stereo camera. For the object analysis, the wearable device 300 may execute time-of-flight (ToF) and/or simultaneous localization and mapping (SLAM) supported by the multi-camera. The user wearing the wearable device 300 may watch an image displayed on the at least one display 350.

According to an embodiment, a frame may be configured with a physical structure in which the wearable device 300 may be worn on the user's body. According to an embodiment, the frame may be configured so that when the user wears the wearable device 300, the first display 350-1 and the second display 350-2 may be positioned corresponding to the user's left and right eyes. The frame may support the at least one display 350. For example, the frame may support the first display 350-1 and the second display 350-2 to be positioned at positions corresponding to the user's left and right eyes.

According to an embodiment, referring to FIG. 3A, according to an embodiment, the frame may include an area 320 at least partially in contact with the portion of the user's body in case that the user wears the wearable device 300. For example, the area 320 of the frame in contact with the portion of the user's body may include an area in contact with a portion of the user's nose, a portion of the user's ear, and a portion of the side of the user's face that the wearable device 300 contacts. According to an embodiment, the frame may include a nose pad 310 that is contacted on the portion of the user's body. When the wearable device 300 is worn by the user, the nose pad 310 may be contacted on the portion of the user's nose. The frame may include a first temple 304 and a second temple 305, which are contacted on another portion of the user's body that is distinct from the portion of the user's body.

According to an embodiment, the frame may include a first rim 301 surrounding at least a portion of the first display 350-1, a second rim 302 surrounding at least a portion of the second display 350-2, a bridge 303 disposed between the first rim 301 and the second rim 302, a first pad 311 disposed along a portion of the edge of the first rim 301 from one end of the bridge 303, a second pad 312 disposed along a portion of the edge of the second rim 302 from the other end of the bridge 303, the first temple 304 extending from the first rim 301 and fixed to a portion of the wearer's ear, and the second temple 305 extending from the second rim 302 and fixed to a portion of the ear opposite to the ear. The first pad 311 and the second pad 312 may be in contact with the portion of the user's nose, and the first temple 304 and the second temple 305 may be in contact with a portion of the user's face and the portion of the user's ear. The temples 304 and 305 may be rotatably connected to the rim through hinge units 306 and 307 of FIG. 3B. The first temple 304 may be rotatably connected with respect to the first rim 301 through the first hinge unit 306 disposed between the first rim 301 and the first temple 304. The second temple 305 may be rotatably connected with respect to the second rim 302 through the second hinge unit 307 disposed between the second rim 302 and the second temple 305. According to an embodiment, the wearable device 300 may identify an external object (e.g., a user's fingertip) touching the frame and/or a gesture performed by the external object by using a touch sensor, a grip sensor, and/or a proximity sensor formed on at least a portion of the surface of the frame.

According to an embodiment, the wearable device 300 may include hardware (e.g., hardware described above based on the block diagram of FIG. 2) that performs various functions. For example, the hardware may include a battery module 370, an antenna module 375, optical devices 382 and 384, speakers 392-1 and 392-2, microphones 394-1, 394-2, and 394-3, a depth sensor module (not illustrated), and/or a printed circuit board 390. Various hardware may be disposed in the frame.

According to an embodiment, the microphones 394-1, 394-2, and 394-3 of the wearable device 300 may obtain a sound signal, by being disposed on at least a portion of the frame. The first microphone 394-1 disposed on the nose pad 310, the second microphone 394-2 disposed on the second rim 302, and the third microphone 394-3 disposed on the first rim 301 are illustrated in FIG. 3B, but the number and disposition of the microphone 394 are not limited to an embodiment of FIG. 3B. In a case that the number of the microphone 394 included in the wearable device 300 is two or more, the wearable device 300 may identify a direction of the sound signal by using a plurality of microphones disposed on different portions of the frame.

According to an embodiment, the optical devices 382 and 384 may transmit a virtual object transmitted from the at least one display 350 to the wave guides 333 and 334. For example, the optical devices 382 and 384 may be projectors. The optical devices 382 and 384 may be disposed adjacent to the at least one display 350 or may be included in the at least one display 350 as a portion of the at least one display 350. The first optical device 382 may correspond to the first display 350-1, and the second optical device 384 may correspond to the second display 350-2. The first optical device 382 may transmit light outputted from the first display 350-1 to the first waveguide 333, and the second optical device 384 may transmit light outputted from the second display 350-2 to the second waveguide 334.

In an embodiment, a camera 340 may include an eye tracking camera (ET CAM) 340-1, a motion recognition camera 340-2 and/or the photographing camera 340-3. The photographing camera 340-3, the eye tracking camera 340-1, and the motion recognition camera 340-2 may be disposed at different positions on the frame and may perform different functions. The photographing camera 340-3, the eye tracking camera 340-1, and the motion recognition camera 340-2 may be an example of the camera 225 of FIG. 2. The eye tracking camera 340-1 may output data indicating a gaze of the user wearing the wearable device 300. For example, the wearable device 300 may detect the gaze from an image including the user's pupil, obtained through the eye tracking camera 340-1. An example in which the eye tracking camera 340-1 is disposed toward the user's right eye is illustrated in FIG. 3B, but the embodiment is not limited thereto, and the eye tracking camera 340-1 may be disposed alone toward the user's left eye or may be disposed toward two eyes.

In an embodiment, the photographing camera 340-3 may photograph a real image or background to be matched with a virtual image in order to implement the augmented reality or mixed reality content. The photographing camera may photograph an image of a specific object existing at a position viewed by the user and may provide the image to the at least one display 350. The at least one display 350 may display one image in which a virtual image provided through the optical devices 382 and 384 is overlapped with information on the real image or background including the image of the specific object obtained by using the photographing camera. In an embodiment, the photographing camera may be disposed on the bridge 303 disposed between the first rim 301 and the second rim 302.

In an embodiment, the eye tracking camera 340-1 may implement a more realistic augmented reality by matching the user's gaze with the visual information provided on the at least one display 350, by tracking the gaze of the user wearing the wearable device 300. For example, when the user looks at the front, the wearable device 300 may naturally display environment information associated with the user's front on the at least one display 350 at a position where the user is positioned. The eye tracking camera 340-1 may be configured to capture an image of the user's pupil in order to determine the user's gaze. For example, the eye tracking camera 340-1 may receive gaze detection light reflected from the user's pupil and may track the user's gaze based on the position and movement of the received gaze detection light. In an embodiment, the eye tracking camera 340-1 may be disposed at a position corresponding to the user's left and right eyes. For example, the eye tracking camera 340-1 may be disposed in the first rim 301 and/or the second rim 302 to face the direction in which the user wearing the wearable device 300 is positioned.

The motion recognition camera 340-2 may provide a specific event to the screen provided on the at least one display 350 by recognizing the movement of the whole or portion of the user's body, such as the user's torso, hand, or face. The motion recognition camera 340-2 may obtain a signal corresponding to motion by recognizing the user's gesture, and may provide a display corresponding to the signal to the at least one display 350. A processor may identify a signal corresponding to the operation and may perform a preset function based on the identification. In an embodiment, the motion recognition camera 340-2 may be disposed on the first rim 301 and/or the second rim 302.

According to an embodiment, the camera 340 included in the wearable device 300 is not limited to the above-described eye tracking camera 340-1 and the motion recognition camera 340-2. For example, the wearable device 300 may identify an external object included in the FoV by using a photographing camera 340-3 disposed toward the user's FoV. The wearable device 300 identifying the external object may be performed based on a sensor for identifying a distance between the wearable device 300 and the external object, such as a depth sensor and/or a time of flight (ToF) sensor. The camera 340 disposed toward the FoV may support an autofocus function and/or an optical image stabilization (OIS) function. For example, in order to obtain an image including a face of the user wearing the wearable device 300, the wearable device 300 may include the camera 340 (e.g., a face tracking (FT) camera) disposed toward the face.

Although not illustrated, the wearable device 300 according to an embodiment may further include a light source (e.g., LED) that emits light toward a subject (e.g., user's eyes, face, and/or an external object in the FoV) photographed by using the camera 340. The light source may include an LED having an infrared wavelength. The light source may be disposed on at least one of the frame, and the hinge units 306 and 307.

According to an embodiment, the battery module 370 may supply power to electronic components of the wearable device 300. In an embodiment, the battery module 370 may be disposed in the first temple 304 and/or the second temple 305. For example, the battery module 370 may be a plurality of battery modules 370. The plurality of battery modules 370, respectively, may be disposed on each of the first temple 304 and the second temple 305. In an embodiment, the battery module 370 may be disposed at an end of the first temple 304 and/or the second temple 305.

In an embodiment, the antenna module 375 may transmit the signal or power to the outside of the wearable device 300 or may receive the signal or power from the outside. The antenna module 375 may be electrically and/or operably connected to communication circuitry (e.g., the communication circuitry 240 of FIG. 2) in the wearable device 300. In an embodiment, the antenna module 375 may be disposed in the first temple 304 and/or the second temple 305. For example, the antenna module 375 may be disposed close to one surface of the first temple 304 and/or the second temple 305.

The speakers 392-1 and 392-2 may output a sound signal to the outside of the wearable device 300. A sound output module may be referred to as a speaker. In an embodiment, the speakers 392-1 and 392-2 may be disposed in the first temple 304 and/or the second temple 305 in order to be disposed adjacent to the ear of the user wearing the wearable device 300. For example, the wearable device 300 may include a second speaker 392-2 disposed adjacent to the user's left ear by being disposed in the first temple 304, and a first speaker 392-1 disposed adjacent to the user's right ear by being disposed in the second temple 305.

The light emitting module (not illustrated) may include at least one light emitting element. The light emitting module may emit light of a color corresponding to a specific state or may emit light through an operation corresponding to the specific state in order to visually provide information on a specific state of the wearable device 300 to the user. For example, when the wearable device 300 requires charging, it may emit repeatedly red light at a designated time. In an embodiment, the light emitting module may be disposed on the first rim 301 and/or the second rim 302.

Referring to FIG. 3B, according to an embodiment, the wearable device 300 may include the printed circuit board (PCB) 390. The PCB 390 may be included in at least one of the first temple 304 or the second temple 305. The PCB 390 may include an interposer disposed between at least two sub PCBs. On the PCB 390, one or more hardware (e.g., hardware illustrated by blocks described above with reference to FIG. 2) included in the wearable device 300 may be disposed. The wearable device 300 may include a flexible PCB (FPCB) for interconnecting the hardware.

According to an embodiment, the wearable device 300 may include at least one of a gyro sensor, a gravity sensor, and/or an acceleration sensor for detecting the posture of the wearable device 300 and/or the posture of a body part (e.g., a head) of the user wearing the wearable device 300. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 300 may identify the user's motion and/or gesture performed to execute or stop a specific function of the wearable device 300 based on the IMU.

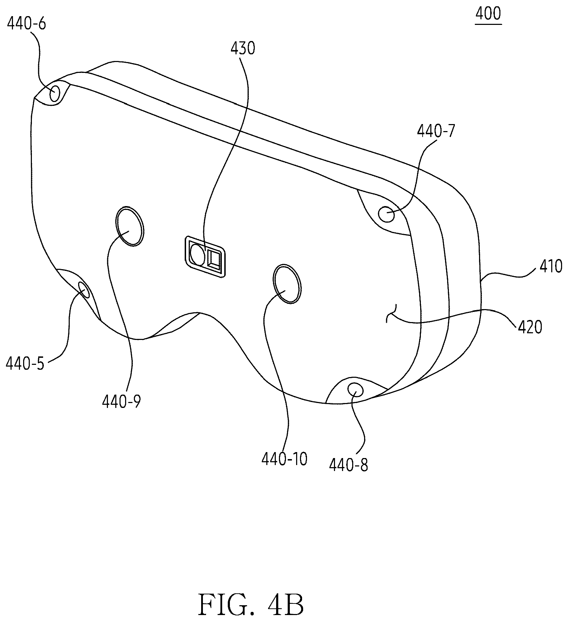

FIGS. 4A to 4B illustrate an example of an exterior of a wearable device 400 according to an embodiment. The wearable device 400 of FIGS. 4A to 4B may include the wearable device 101 of FIGS. 1 to 2. According to an embodiment, an example of an exterior of a first surface 410 of a housing of the wearable device 400 is shown in FIG. 4A, and an example of an exterior of a second surface 420 opposite to the first surface 410 may be shown in FIG. 4B.

Referring to FIG. 4A, according to an embodiment, the first surface 410 of the wearable device 400 may have an attachable shape on the user's body part (e.g., the user's face). Although not illustrated, the wearable device 400 may further include a strap for being fixed on the user's body part, and/or one or more temples (e.g., the first temple 304 and/or the second temple 305 of FIGS. 3A to 3B). A first display 350-1 for outputting an image to the left eye among the user's two eyes and a second display 350-2 for outputting an image to the right eye among the user's two eyes may be disposed on the first surface 410. The wearable device 400 may further include rubber or silicon packing, which are formed on the first surface 410, for preventing interference by light (e.g., ambient light) different from the light emitted from the first display 350-1 and the second display 350-2.

According to an embodiment, the wearable device 400 may include cameras 440-1 and 440-2 for photographing and/or tracking two eyes of the user adjacent to each of the first display 350-1 and the second display 350-2. The cameras 440-1 and 440-2 may be referred to as the ET camera. According to an embodiment, the wearable device 400 may include cameras 440-3 and 440-4 for photographing and/or recognizing the user's face. The cameras 440-3 and 440-4 may be referred to as a FT camera.

Referring to FIG. 4B, a camera (e.g., cameras 440-5, 440-6, 440-8, 440-8, 440-9, and 440-10), and/or a sensor (e.g., the depth sensor 430) for obtaining information associated with the external environment of the wearable device 400 may be disposed on the second surface 420 opposite to the first surface 410 of FIG. 4A. For example, the cameras 440-5, 440-6, 440-7, 440-8, 440-9, and 440-10 may be disposed on the second surface 420 in order to recognize an external object distinct from the wearable device 400. For example, by using cameras 440-9 and 440-10, the wearable device 400 may obtain an image and/or video to be transmitted to each of the user's two eyes. The camera 440-9 may be disposed on the second surface 420 of the wearable device 400 to obtain a frame to be displayed through the second display 350-2 corresponding to the right eye among the two eyes. The camera 440-10 may be disposed on the second surface 420 of the wearable device 400 to obtain a frame to be displayed through the first display 350-1 corresponding to the left eye among the two eyes.

According to an embodiment, the wearable device 400 may include the depth sensor 430 disposed on the second surface 420 in order to identify a distance between the wearable device 400 and the external object. By using the depth sensor 430, the wearable device 400 may obtain spatial information (e.g., a depth map) about at least a portion of the FoV of the user wearing the wearable device 400.

Although not illustrated, a microphone for obtaining sound outputted from the external object may be disposed on the second surface 420 of the wearable device 400. The number of microphones may be one or more according to embodiments.

As described above, according to an embodiment, the wearable device 400 may have a form factor for being worn on a head of a user. The wearable device 400 may provide a user experience based on augmented reality and/or mixed reality in a state worn on the head. The wearable device 400 may identify a shape of a grip of a body part contacted to an external object by using the cameras 440-5, 440-6, 440-7, 440-8, 440-9, and 440-10. The wearable device 400 may change a sense of distance to the media content by changing the binocular parallax of the media content based on the shape of the grip in a state that the gesture tracker 272 of FIG. 2 is executed. The wearable device 101 may change a mode and/or a state for displaying media content according to the shape of the grip.

Hereinafter, referring to FIG. 5, an example of an operation performed by a wearable device (e.g., the wearable device 101 of FIGS. 1 to 2), including the wearable device 300 of FIGS. 3A to 3B and/or the wearable device 400 of FIGS. 4A to 4B based on a shape of a grip is described.

FIG. 5 illustrates an example of a flowchart of a wearable device according to an embodiment. The wearable device 101 of FIGS. 1 to 2 may include the wearable device of FIG. 5. The operation of the wearable device described with reference to FIG. 5 may be performed by the wearable device 101 and/or the processor 210-1 of FIG. 2.

Referring to FIG. 5, in an operation 510, according to an embodiment, a wearable device may obtain a frame using a camera. The wearable device may obtain a frame in a direction of the wearable device by using the camera 225 of FIG. 2. The camera of the operation 510 may be positioned toward a forward of a user in a state that the user wears the wearable device.

Referring to FIG. 5, in an operation 520, according to an embodiment, the wearable device may identify a shape of a grip of a body part with respect to an external object based on detecting the body part contacted to the external object in the frame. The wearable device may identify the shape of the grip of the body part contacted to the external object based on identifying the external object including a stylus in the frame of the operation 510. For example, the wearable device may measure positions of a plurality of joints included in a hand in the frame and/or angles between the plurality of joints based on identifying the hand contacted to the external object in the frame. The wearable device may identify the shape of the grip based on the measured positions and/or angles.

Referring to FIG. 5, in an operation 530, according to an embodiment, the wearable device may determine whether the identified shape of the grip corresponds to a first shape of a grip based on the operation 520. The first shape of the grip may be formed by a hand that directs an end of an external object in a specific direction, illustrated with reference to the frame 111 of FIG. 1. In a state that the first shape of the grip is identified based on the operation 520 (530-YES), according to an embodiment, the wearable device may display one or more media contents based on a first distance corresponding to the first shape of the grip by performing an operation 540. The first distance may include a distance relatively far from a user wearing the wearable device, such as the first distance d1 of FIG. 1. The wearable device may display one or more media contents using a binocular parallax associated with the first distance in order to provide a sense of distance based on the first distance. The wearable device may display a plurality of media contents stored in the wearable device, as in the first state 191 of FIG. 1.

Referring to FIG. 5, in case that a shape of a grip different from the first shape of the grip is identified based on the operation 520 (530-NO), the wearable device may determine whether the shape of the grip corresponds to a second shape of the grip by performing an operation 550. The second shape of the grip may be formed by a hand gripping an external object to draw a letter and/or a picture illustrated with reference to the frame 112 of FIG. 1. In the state of identifying the second shape of the grip (550-YES), the wearable device may correspond to the second shape of the grip and display a media content based on a second distance shorter than the first distance by performing an operation 560. Since the media content is displayed according to the second distance shorter than the first distance, a size of the media content visible through the display may increase. The wearable device displaying media content according to the second distance shorter than the first distance may provide a user experience such that the media content approaches a user wearing the wearable device. The second distance may be shorter than the first distance of the operation 540 as in the second distance d2 of FIG. 1. The wearable device may display a media content based on a binocular parallax exceeding the binocular parallax corresponding to the first distance. The wearable device may change at least a portion of the media content based on a motion of the external object, as in the second state 192 of FIG. 1.

Based on identifying a shape of a grip different from the first shape of the grip and the second shape of the grip (550-NO), the wearable device may execute a function corresponding to the motion of the external object by performing an operation 570. The wearable device may execute the function corresponding to the motion of the external object while maintaining a distance of the media content. For example, the wearable device may move a media content or change a mode (e.g., an AR or a VST) in which the media content is displayed. For example, the wearable device may sequentially remove a plurality of media contents displayed through the display. For example, the wearable device may switch between a first screen on which the plurality of media contents are displayed or a second screen (e.g., a launcher screen) that includes a list of the plurality of applications installed in the wearable device.

As described above, according to an embodiment, the wearable device may adjust a distance of a media content based on a shape of a grip. In a state that the media content is moved relatively far (e.g., the operation 540), the wearable device may execute a function for viewing a plurality of media contents. In a state that the media content is moved relatively close (e.g., the operation 560), the wearable device may execute a function for changing the media content.

Hereinafter, an operation performed by the wearable device based on the shape of the grip of the body part with respect to the external object will be described, in a state that one or more media contents are displayed at the first distance by performing the operation 540.

FIG. 6 illustrates an example of an operation in which a wearable device 101 moves a plurality of media contents 121, 122, and 123 based on a shape of a grip of a body part with respect to an external object according to an embodiment. The wearable device 101 of FIG. 2 may include the wearable device 101 of FIG. 6. According to an embodiment, the wearable device 101 may switch to a state of FIG. 6 based on a gesture and/or a first shape of a grip, in which a body part including a hand is used to orient an external object (e.g., a pen and/or a stylus) in a specific direction, as in the frame 111 of FIG. 1. In the state of FIG. 6, the wearable device 101 may display the plurality of media contents 121, 122, and 123 based on a first distance d1.

In the state of FIG. 6, the wearable device 101 may display the plurality of media contents 121, 122, and 123 in an area having a width h1 formed based on a preset viewing angle Θ (e.g., approximately 45 °) and the first distance d1. The width h1 of the area may be set to display all of the plurality of media contents 121, 122, and 123 on a display area of the wearable device 101. For example, in an exemplary state of FIG. 6, all of the plurality of media contents 121, 122, and 123 may be displayed simultaneously in the display area.

Referring to FIG. 6, in a state of displaying the plurality of media contents 121, 122, and 123 based on the first distance d1, the wearable device 101 may identify a shape of a grip of a body part with respect to an external object. The wearable device 101 may obtain a frame (e.g., frames 601, 602, and 603) from a camera (e.g., the camera 225 of FIG. 2) positioned toward a direction D to identify the shape of the grip. The wearable device 101 may execute different functions associated with viewing of the plurality of media contents 121, 122, and 123 based on the shape of the grip identified in the frame.

Referring to FIG. 6, the wearable device 101 may identify a motion of a body part 610 tilting an external object 620 along a direction 631 based on the first shape of the grip, based on the frames 601. In an embodiment, the motion may be identified through an IMU (e.g., a gyro sensor) included in the external object 620. For example, the wearable device 101 may obtain information indicating an angle at which the external object 620 is tilted by the motion from the external object 620. For example, the wearable device 101 may receive the information from the external object 20 based on a wireless communication link established by a wireless communication protocol such as a bluetooth low-energy (BLE). The wearable device 101 may change a size and/or a distance of the plurality of media contents 121, 122, and 123 based on the angle at which the external object 620 is tilted by the motion. For example, the wearable device 101 may change binocular parallaxes of the plurality of media contents 121, 122, and 123 by an amount of change corresponding to the angle from a binocular parallax corresponding to the first distance d1. For example, the wearable device 101 may increase or decrease the sizes of the plurality of media contents 121, 122, and 123 according to the angle at which the external object 620 is tilted. For example, in the first shape of the grip of the body part 610 with respect to the external object 620, the motion of tilting the external object 620 may correspond to an input for changing the size and/or the distance of the plurality of media contents 121, 122, and 123.

Referring to FIG. 6, based on the frames 602, the wearable device 101 may identify another body part 640 contacted to an end of the external object 620 contacted to the body part 610 based on the first shape of the grip. For example, the wearable device 101 may identify a motion that tilts the external object 620 in one of the directions 632 or 633, which are perpendicular to each other, using the body part 640, in a state of fixing another end of the external object 620 using the body part 610 based on the frames 602. Each of the directions 632 and 633 perpendicular to each other may correspond to each of directions 6h and 6v moving the plurality of media contents 121, 122, and 123 in the display area. For example, based on identifying the external object 620 tilted along the direction 632 perpendicular to the direction D using the frames 602, the wearable device 101 may move the plurality of media contents 121, 122, and 123 in the direction 6h in the display area. For example, the direction 6h may be parallel to a horizontal axis of the display area. For example, the wearable device 101 may move the plurality of media contents 121, 122, and 123 along the direction 6v in the display area based on identifying the external object 620 tilted along the direction 633 parallel to the direction D using the frames 602. For example, the direction 6v may be parallel to a vertical axis of the display area.

As described above, according to an embodiment, the wearable device 101 may identify the shape of the grip of the body part 610 with respect to the external object 620 based on frames obtained from the camera in a state of displaying the plurality of media contents 121, 122, and 123 at the first distance d1. The wearable device 101 may move the plurality of media contents 121, 122, and 123 based on the shape of the grip. For example, the wearable device 101 may change a binocular parallax of the plurality of media contents 121, 122, and 123 from the binocular parallax corresponding to the first distance d1 to another binocular parallax, based on the direction 631 of the external object 620 tilted by the body part 610 in the first shape of the grip. For example, the wearable device 101 may move the plurality of media contents 121, 122, and 123 along at least one of the directions 6h and 6v of the display area, based on the direction (e.g., at least one of the directions 632 and 633) of the external object 620 tilted by the body part 640 different from the body part 610 contacted to the external object 620 based on the first shape of the grip.

In the state of FIG. 6, the wearable device 101 may identify a second shape of a grip associated with handwritings, as in the frame 112 of FIG. 1, using frames obtained from the camera. The wearable device 101 may move one of the plurality of media contents 121, 122, and 123 from the first distance d1 to a second distance (e.g., the second distance d2 of FIG. 1) shorter than the first distance d1, in response to identifying the second shape of the grip. The wearable device 101 may at least temporarily cease displaying other media contents distinguished from the moved media content based on the second distance. For example, the wearable device 101 may move the media content 121 aligned in a center of the display area among the plurality of media contents 121, 122, and 123 to the second distance and hide or remove other media contents 122 and 123 from the display area. Hereinafter, an example of an operation performed by the wearable device 101 based on the motion of the external object in a state of moving one of the plurality of media contents 121, 122, and 123 to a second distance shorter than or equal to the first distance d1 will be described.

FIG. 7 illustrates an example of an operation of changing a media content based on a motion of an external object by a wearable device 101 according to an embodiment. The wearable device 101 of FIG. 2 may include the wearable device 101 of FIG. 7. According to an embodiment, the wearable device 101 may identify a second shape of a grip of a body part 112-2 for writing using an external object 112-1 based on a frame 112. Referring to FIG. 7, an exemplary state in which the wearable device 101 identifying the second shape of the grip displays a media content 121 at a second distance d2 shorter than a first distance d1 is illustrated.

In a state of FIG. 7, according to an embodiment, the wearable device 101 may display the media content 121 spaced apart from the wearable device 101 according to the second distance d2 based on identifying the second shape of the grip. The wearable device 101 may move the displayed media content 121 displayed based on the second distance d2 to a position of the external object 112-1 included in a display area. For example, the wearable device 101 may display the media content 121 in association with an end P of the external object 112-1 in the display area. For example, the wearable device 101 may move the media content 121 to a position in the display area mapped to the position of the external object 112-1 identified in the frame 112. For example, the wearable device 101 may move the media content 121 at a preset distance (e.g., approximately 3 cm) from the end P of the external object 112-1.

Referring to FIG. 7, in a state that the media content 121 is moved at the second distance d2 (e.g., approximately 30 cm), the wearable device 101 may track a motion of the external object 112-1. For example, the wearable device 101 may track a path through which the external object 112-1 moves in a portion of the display area where the media content 121 is displayed by using a camera. The wearable device 101 may change at least a portion of the media content 121 based on the tracked path.

According to an embodiment, the media content 121 displayed by the wearable device 101 in the display area may include a visual object for interaction between the wearable device 101 and a user 110. For example, in a state that the wearable device 101 displays the media content 121 generated based on hypertext marked-up language (HTML), the wearable device 101 may display a visual object selectable by a user, such as a radio button, a checkbox, a combo box, a text box and/or a button. According to an embodiment, the wearable device 101 may enlarge, in the media content 121, a portion 710 including one or more visual objects for interaction. Referring to FIG. 7, the wearable device 101 may enlarge the portion 710 including a plurality of check boxes. The wearable device 101 may identify an input for selecting at least one of one or more visual objects (e.g., the plurality of check boxes) included in the portion 710 based on the motion of an end P of the external object 112-1 identified in the enlarged portion 710. The wearable device 101 may change the visual object selected by the input in the enlarged portion 710 based on the input.

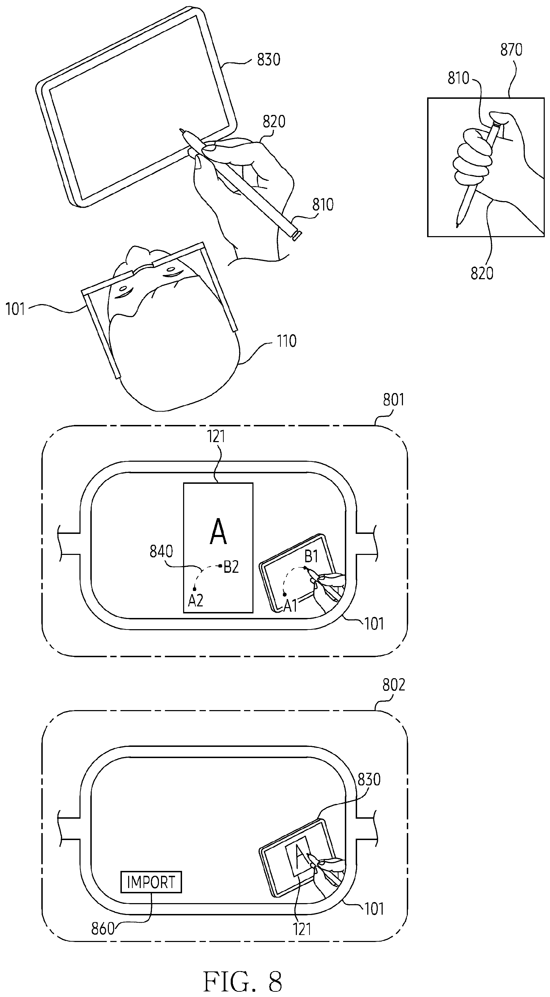

As described above, according to an embodiment, the wearable device 101 may selectively execute a function of viewing a plurality of media contents or a function for editing one media content using different distances (e.g., the first distance d1 and/or the second distance d2). The wearable device 101 according to an embodiment may communicate with an external electronic device (e.g., the external electronic device 201 of FIG. 2) to execute a function for editing media content based on an external object contacted on the external electronic device. Hereinafter, referring to FIG. 8, according to an embodiment, an example of an operation performed by the wearable device 101 based on an external object contacted on an external electronic device will be described.

FIG. 8 illustrates an example of an operation in which a wearable device 101 changes a media content based on an external object 810 contacted to an external electronic device 830 according to an embodiment. The wearable device 101 of FIG. 2 may include the wearable device 101 of FIG. 8. Referring to FIG. 8, according to an embodiment, exemplary states 801 and 802 in which the wearable device 101 executes a function for editing one media content based on a second shape of a grip are illustrated. In the state of FIG. 8, the wearable device 101 may identify the external electronic device 830 using communication circuitry (e.g., the communication circuitry 240-1 of FIG. 2). The external electronic device 201 of FIG. 2 may include the external electronic device 830 of FIG. 8.

Referring to FIG. 8, an example of the external electronic device 830 wirelessly connected to the wearable device 101 is illustrated. The external electronic device 830 may include a terminal such as a smartphone, a smartpad, a tablet PC, and a personal computer (PC) such as a laptop and a desktop. The external electronic device 830 may include a display coupled with a sensor for identifying contact with an external object 810. In an embodiment, the wearable device 101 may receive information on the external object 810 contacted to the display (e.g., the display 220-2 of FIG. 2) of the external electronic device 830 from the external electronic device 830. For example, the external electronic device 830 may transmit information on a contact point of the external object 810 to the wearable device 101 in response to identifying the external object 810 contacted on the display of the external electronic device 830. The wearable device 101 receiving the information may change a media content 121 based on the contact point.

The states 801 and 802 of FIG. 8 may be exemplary states in which the wearable device 101 enters to change the media content 121 based on the information, according to an embodiment. In the state 801 of FIG. 8, according to an embodiment, the wearable device 101 may identify a path of a contact point of the external object 810 moved from a point A1 to a point B1 on the display of the external electronic device 830 based on the information. The wearable device 101 may display a visual object 840 representing the path on the media content 121 displayed at a second distance (e.g., the second distance d2 of FIG. 7) in a display area based on the path. The visual object 840 may have a shape of a stroke from a point A2 in the media content 121 mapped to the point A1 toward a point B2 in the media content 121 mapped to the point B1.

In the state 802 of FIG. 8, the wearable device 101 may transmit information for displaying the media content 121 in the display of the external electronic device 830 to the external electronic device 830. The external electronic device 830 may display the media content 121 in the display based on the information. In the state 802 in which the media content 121 is displayed through the display of the external electronic device 830, the wearable device 101 may display a visual object 860 in a shape of a button in the display area. Through the visual object 860, the wearable device 101 may receive an input for moving the media content 121 displayed through the display of the external electronic device 830 to the display area of the wearable device 101. For example, in response to an input indicating selection of the visual object 860, the wearable device 101 may switch from the state 802 to the state 801.

In an embodiment, the switching between the states 801 and 802 may be performed by a shape of a grip identified by frames obtained through the camera of the wearable device 101. For example, the wearable device 101 that has obtained frames 870 may identify a motion that contacts a portion (e.g., a fingertip of a thumb) of a body part 820 at an end of the external object 810. The wearable device 101 may switch between the states 801 and 802 based on the motion. For example, the wearable device 101 that has identified the motion in the state 801 may switch from the state 801 to the state 802. For example, the wearable device 101 that has identified the motion in the state 802 may switch from the state 802 to the state 801. In an embodiment, the state 801 may be included in a VR mode in terms of virtually displaying the media content 121 in a display area of the wearable device 101. In an embodiment, the state 802 may be included in a VST mode from the perspective that light outputted from the display of the external electronic device 830 on which the media content 121 is displayed passes through the display area of the wearable device 101 and faces eyes of the user 110. In order to allow the light to pass through the display area, the wearable device 101 may generate an area (e.g., a punching area) having a preset transparency (e.g., 100% transparency) in a portion corresponding to the external electronic device 830 in the display area.

As described above, according to an embodiment, the wearable device 101 may track the path of the external object 810 by communicating with the external electronic device 830. The wearable device 101 may obtain the media content 121 that is at least partially changed based on the tracked path. For example, the wearable device 101 may directly change the media content 121 based on the tracked path. For example, the wearable device 101 may obtain the media content 121 changed by the path from the external electronic device 830.

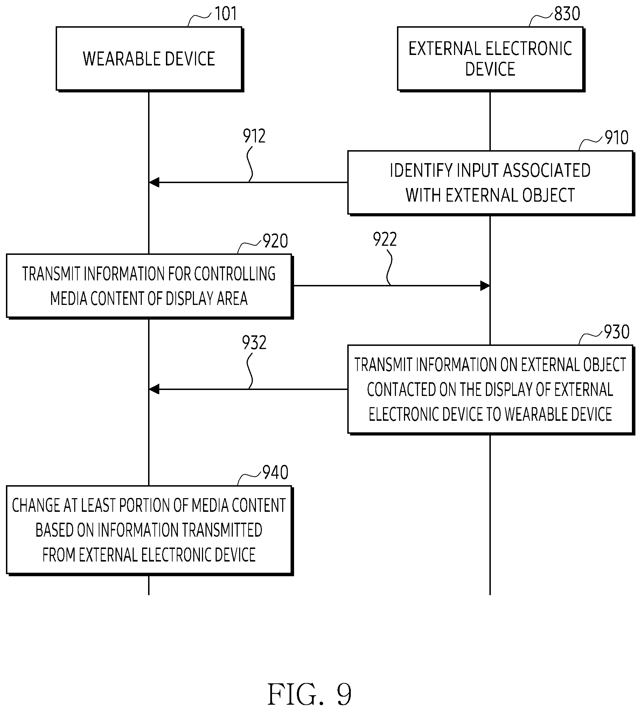

Hereinafter, one or more signals exchanged between the wearable device 101 and the external electronic device 830 according to an embodiment will be described with reference to FIG. 9.

FIG. 9 illustrates an example of a signal flowchart of a wearable device 101 and an external electronic device 830 according to an embodiment. The wearable device 101 and the external electronic device 201 of FIG. 2 may include the wearable device 101 and the external electronic device 830 of FIG. 9, respectively.

Referring to FIG. 9, in an operation 910, the external electronic device 830 may identify an input associated with an external object. For example, the external electronic device 830 may identify the external object (e.g., the external object 810 of FIG. 8) that is connected on the display of the external electronic device 830 (e.g., the display 220-2 of FIG. 2) using a sensor coupled with the display. In an embodiment, the external electronic device 830 may transmit information 912 associated with the input to the wearable device 101 in response to identifying the input. The information 912 may include data for notifying a contact between the external electronic device 830 and the external object.

Referring to FIG. 9, in an operation 920, according to an embodiment, the wearable device 101 may transmit information 922 for controlling the media content of the display area to the external electronic device 830. The wearable device 101 may identify a contact between the external electronic device 830 and the external object based on the information 912. The contact may be identified based on data of a touch sensor (e.g., digitizer) formed on the display of the external electronic device 830. The wearable device 101 may transmit the information 922 associated with media content displayed in the display area of the wearable device 101 to the external electronic device 830 based on identifying the contact between the external electronic device 830 and the external object. The information 922 may include data for displaying at least a portion of the media content through the display of the external electronic device 830.

Referring to FIG. 9, in an operation 930, the external electronic device 830 may transmit information 932 on the external object contacted on the display of the external electronic device 830 to the wearable device 101. The information 932 may include the path (or trajectory) and/or pressure of a contact point of the external object on the display, identified based on the data of the sensor of the external electronic device 830. The external electronic device 830 may perform the operation 930 independently of displaying a media content on the display of the external electronic device 830 based on the information 922.

Referring to FIG. 9, in an operation 940, according to an embodiment, the wearable device 101 may change at least a portion of a media content based on the information 932 transmitted from an external electronic device. For example, the wearable device 101 may couple the visual object representing the path on the media content based on the path of the external object contacted on the display of the external electronic device 830 included in the information 932.

As described above, according to an embodiment the wearable device 101 may identify a shape of a grip or change a distance of media content in the display area based on an execution of an application (e.g., the word processor application 261 of FIG. 2) for viewing and/or editing the media content. Hereinafter, an example of an operation in which the wearable device 101 executes a function matched to the shape of a grip based on the execution of another application different from the application, according to an embodiment, will be described with reference to FIGS. 10A to 10B.

FIGS. 10A to 10B illustrate an example of an operation in which a wearable device 101 according to an embodiment displays a user interface (UI) for controlling a media content based on a shape of a grip of a body part with respect to an external object. The wearable device 101 of FIG. 2 may include the wearable device 101 of FIGS. 10A to 10B.

Referring to FIG. 10A, according to an embodiment, exemplary states 1001 and 1002 in which the wearable device 101 plays a media content 1005 based on execution of an application for playing video (e.g., the video player application 262 of FIG. 2) are illustrated. The media content 1005 may be stored in memory (e.g., the memory 215-1 of FIG. 2) of the wearable device 101 or may be streamed from an external electronic device (e.g., a server for providing a video streaming service) different from the wearable device 101 through communication circuitry (e.g., the communication circuitry 240-1 of FIG. 2).

In the state 1001 of FIG. 10A, the wearable device 101 may obtain a frame 111 using a camera (e.g., the camera 225 of FIG. 2) while displaying the media content 1005 based on the application. The wearable device 101 may identify a first shape of a grip formed by an external object 111-1 and a body part 111-2 based on the frame 111. The wearable device 101 may execute a function matched to the first shape of the grip in the application based on identifying the first shape of the grip. Referring to FIG. 10A, in the state 1001, the wearable device 101 may display a visual object 1010 for adjusting the volume together with the media content 1005 by executing a function corresponding to the first shape of the grip. Although the visual object 1010 having a shape based on a circle is illustrated as an example, the embodiment is not limited thereto. In the state 1001 of FIG. 10A, in the first shape of the grip, the wearable device 101 may change a parameter (e.g., a volume) mapped to the visual object 1010 based on a motion of the body part 111-2 tilting the external object 111-1. The wearable device 101 may deform (e.g., rotate) the visual object 1010 based on the change in the parameter. For example, the wearable device 101 may change the volume of sound outputted from a speaker of the wearable device 101 based on the motion, based on a play of the media content 1005.

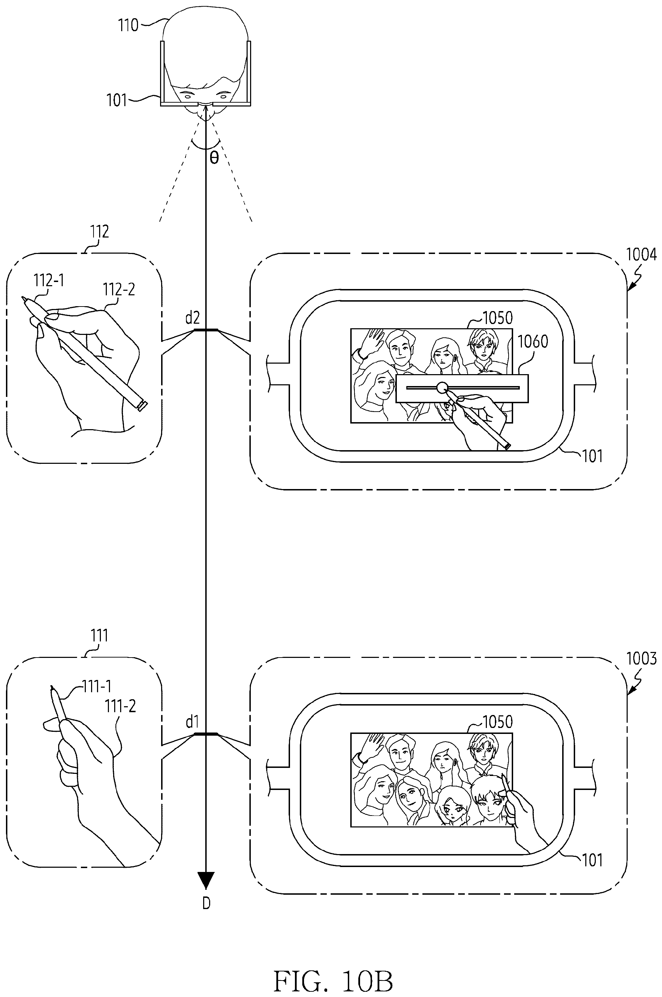

In the state 1002 of FIG. 10A, the wearable device 101 may identify a second shape of a grip formed by an external object 112-1 and a body part 112-2 based on a frame 112 obtained while displaying the media content 1005. The wearable device 101 may execute a function matched to the second shape of the grip in the application, based on identifying the second shape of the grip. In the state 1002 of FIG. 10B, the wearable device 101 may display a visual object 1020 for adjusting a plurality of parameters associated with an audio signal outputted from the wearable device 101 together with the media content 1005 by executing a function corresponding to the second shape of the grip. Although the visual object 1020 having a shape of a pop-up window is illustrated as an example, an embodiment is not limited thereto. For example, in the visual object 1020, the wearable device 101 may identify frequency-specific gains to be applied to the audio signal in the frequency domain through the volume of the audio signal of the media content 1005 and/or a portion of the visual object 1020 having a shape of an equalizer. Based on a plurality of parameters adjusted by the visual object 1020, the wearable device 101 may play an audio signal included in the media content 1005.

Referring to FIG. 10B, according to an embodiment, exemplary states 1003 and 1004 in which the wearable device 101 executes an application (e.g., the browsing application 263 of FIG. 2) for viewing an image and displays the media content 1050 are illustrated. The media content 1050 may be stored in the memory of the wearable device 101 or may be provided from an external electronic device and/or a server connected through the communication circuitry.

In the state 1003 of FIG. 10B, the wearable device 101 may identify the external object 111-1 and the body part 111-2 coupled along the first shape of the grip in the frame 111 obtained using the camera. The wearable device 101 may enlarge and/or reduce the media content 1050 based on the first shape of the grip. For example, the wearable device 101 may enlarge or reduce the media content 1050 based on a magnification less than or equal to three times a preset magnification.

In the state 1004 of FIG. 10B, the wearable device 101 may identify an external object 112-1 and a body part 112-2 coupled along the second shape of the grip in the frame 112 obtained using the camera. The wearable device 101 may enlarge or reduce the media content 1050 based on a magnification (e.g., a magnification of 10 times or more) greater than or equal to the preset magnification based on the second shape of the grip. In the state 1004, the wearable device 101 may display a visual object 1060 for changing the magnification. The wearable device 101 may display a text (e.g., "x10") indicating the magnification in the visual object 1060. Although a shape of the visual object 1060 including a slider within the pop-up window is illustrated, the embodiment is not limited thereto.

As described above, according to an embodiment, the wearable device 101 may selectively execute a function matching the shape of the grip described with reference to each of the frames 111 and 112 among functions supported by an application executed by the wearable device 101. The wearable device 101 may obtain various parameters (e.g., volume, equalizer, and/or magnification) associated with the media content independently of moving the media content based on the function.

According to an embodiment, a shape of a grip identified by the wearable device 101 is not limited to the frames 111 and 112 of FIG. 2 as well as the frames 601 and 602 of FIG. 6 and the frame 870 of FIG. 8. Hereinafter, an example of an operation performed by the wearable device 101 based on a gesture of rotating an external object such as a stylus will be described with reference to FIG. 11.

FIG. 11 illustrates an example of an operation in which a wearable device 101 displays a screen based on a motion of an external object 1110 according to an embodiment. The wearable device 101 of FIG. 2 may include the wearable device 101 of FIG. 11. Referring to FIG. 11, according to an embodiment, different states 1101 and 1102 in which the wearable device 101 displays a screen in a FoV of a user 110 are illustrated.

In the state 1101 of FIG. 11, according to an embodiment, the wearable device 101 may display a plurality of media contents 1131, 1132, and 1133 in a display area. In the state 1101, the wearable device 101 may identify the shape of the grip of a body part 1120 with respect to the external object 1110. For example, the wearable device 101 may obtain frames in which the shape is captured. The wearable device 101 may identify the body part 1120 for rotating the external object 1110 along a R1 direction based on the frames. According to an embodiment, the wearable device 101 may switch between the states 1101 and 1102 based on the external object 1110 rotated along the R1 direction. In the state 1101, the wearable device 101 may sequentially hide or remove at least one of the plurality of media contents 1131, 1132, and 1133 according to the number of rotations of the external object 1110 based on the external object 1110 that rotates along the R1 direction. For example, the wearable device 101 may sequentially hide or remove the media contents 1131, 1132, and 1133 based on the order in which the media contents 1131, 1132, and 1133 are stacked.

Referring to FIG. 11, according to an embodiment, the wearable device 101 may identify a grip of the body part 1120 with respect to the external object 1110. For example, the wearable device 101 may identify the body part 1120 for rotating the external object 1110 along a R2 direction in frames obtained from a camera. The wearable device 101 may switch (or toggle) between the states 1101 and 1102 based on the external object 1110 rotated along the R2 direction. For example, referring to FIG. 11, the state 1101 may include a state in which the wearable device 101 displays the plurality of the media contents 1131, 1132, and 1133 in a layout for viewing media contents. For example, the state 1102 may include a state for displaying an area 1140 in which icons representing applications are positioned. In the state 1102, the screen displayed in a display area by the wearable device 101 may be referred to as a launcher screen (or a dashboard, or home screen). In the state 1101, the wearable device 101 identifying the body part 1120 that has rotated the external object 1110 along the R2 direction may switch from the state 1101 to the state 1102. Similarly, the wearable device 101 identifying the body part 1120 that has rotated the external object 1110 along the R2 direction in the state 1102 may switch from the state 1102 to the state 1101.

A direction in which the external object 1110 is rotated and a function of the wearable device 101 executed by the direction are not limited to an embodiment of FIG. 11. For example, the wearable device 101 that identifies a motion of the external object 1110 that rotates along the R1 direction may switch a state of the wearable device 101 between the states 1101 and 1102. For example, the wearable device 101 that identifies the motion of external object 1110 that rotates along the R2 direction may remove or hide the plurality of media contents 1131, 1132, and 1133.

As described above, according to an embodiment, the wearable device 101 may display a media content and/or a virtual object having a binocular parallax. The wearable device 101 may identify the shape of the grip of the body part with respect to the external object based on identifying contact of the body part with respect to the external object having a shape of a pen. The wearable device 101 may change the binocular parallax based on the shape of the grip. The wearable device 101 may view different media contents stored in the wearable device 101 with the change of the binocular parallax, and/or execute a function matched to the shape of the grip, such as editing the media content.

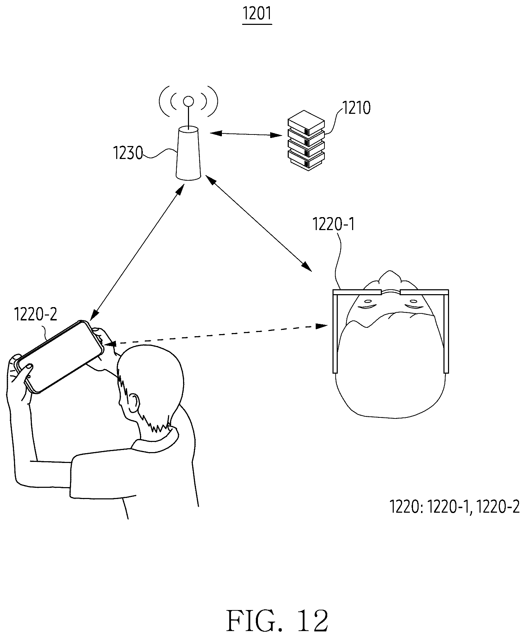

The operation of the wearable device 101 described above with reference to FIGS. 1 to 11 may be associated with a metaverse service provided through a network. Hereinafter, an example of the metaverse service provided to a user based on the wearable device 101 according to an embodiment will be described with reference to FIG. 12.

Metaverse is a compound word of the English words "Meta" meaning "virtual" and "transcendence" and "Universe" meaning cosmos, and refers to a three-dimensional virtual world in which social, economic, and cultural activities take place like a real world. Metaverse is a concept that has evolved one step further than a virtual reality (VR, cutting-edge technology that enables people to experience real-life experiences in a virtual world created by a computer), and it is characterized by using avatars to not only enjoy games or virtual reality, but also social and cultural activities like a reality. A metaverse service may provide media content for enhancing immersion in the virtual world, based on an augmented reality (AR), a virtual reality environment (VR), a mixed environment (MR), and/or an extended reality (XR).

For example, media content provided by the metaverse service may include social interaction content including avatar-based game, concert, party, and/or meeting. For example, the media content may include information for economic activities such as advertising, user created content, and/or sales and/or shopping of productions. Ownership of the user created content may be proved by a blockchain-based non-fungible token (NFT). The metaverse service may support economic activities based on real money and/or cryptocurrency. By the metaverse service, virtual content associated with the real world, such as digital twin or life logging, may be provided.

FIG. 12 is an exemplary diagram of a network environment 1201 in which a metaverse service is provided through a server 1210.

Referring to FIG. 12, a network environment 1201 may include a server 1210, a user terminal 1220 (e.g., a first terminal 1220-1 and a second terminal 1220-2), and a network connecting the server 1210 and the user terminal 1220. In the network environment 1201, the server 1210 may provide a metaverse service to the user terminal 1220. The network may be formed by at least one intermediate node 1230 including an access point (AP) and/or a base station. The user terminal 1220 may access the server 1220 through the network and output a user interface (UI) associated with a metaverse service to a user of the user terminal 1220. Based on the UI, the user terminal 1220 may obtain information to be inputted into the metaverse service from the user, or output information (e.g., multimedia content) associated with the metaverse service to the user.

In this case, the server 1210 provides a virtual space so that the user terminal 1220 may perform activities in the virtual space. In addition, the user terminal 1220 may represent information provided by the server 1210 to the user by installing an S/W agent to access the virtual space provided by the server 1210, or transmit information that the user wants to represent in the virtual space to the server. The S/W agent may be provided directly through the server 1210, downloaded from a public server, or embedded and provided when purchasing a terminal.

In an embodiment, the metaverse service may provide a service to the user terminal 1220 and/or a user by using the server 1210. The embodiment is not limited thereto, and the metaverse service may be provided through individual contacts between users. For example, in the network environment 1201, the metaverse service may be provided by a direct connection between the first terminal 1220-1 and the second terminal 1220-2, independently of the server 1210. Referring to FIG. 12, in the network environment 1201, the first terminal 1220-1 and the second terminal 1220-2 may be connected to each other through a network formed by at least one intermediate node 1230. In an embodiment in which the first terminal 1220-1 and the second terminal 1220-2 are directly connected, any one of the first terminal 1220-1 and the second terminal 1220-2 may perform a role of the server 1210. For example, a metaverse environment may be configured only with a device-to-device connection (e.g., a peer-to-peer (P2P) connection).

In an embodiment, the user terminal 1220 (or the user terminal 1220 including the first terminal 1220-1 and the second terminal 1220-2) may be made in various form factors, and it is characterized by including an output device for providing an image and/or sound to the user and an input device for inputting information into the metaverse service. An exemplary user terminal 1220 in various form factors may include a smartphone (e.g., the second terminal 1220-2), an AR device (e.g., the first terminal 1220-1), a VR device, an MR device, a Video See Through (VST) device, an Optical See Through (OST) device, a smart lens, a smart mirror, a TV capable of inputting and outputting, or a projector.

A network (e.g., a network formed by at least one intermediate node 1230) includes all of various broadband networks including 3G, 4G, and 5G and short-range networks (e.g., a wired network or a wireless network that directly connects the first terminal 1220-1 and the second terminal 1220-2) including Wi-Fi and BT.

In an embodiment, a user terminal 1220 of FIG. 12 may include the wearable device 101 of FIGS. 1 to 11.

In an embodiment, a method may be required to adjust a sense of distance of at least one media content displayed through a display area based on a shape of a grip identified using a camera of a wearable device. As described above, according to an embodiment, a wearable device (e.g., the wearable device 101 of FIGS. 1 to 11) may comprise a camera (e.g., the camera 225 of FIG. 2), a display (e.g., the display 220-1 of FIG. 2), memory (e.g., the memory 215-1 of FIG. 2) storing instructions, and a processor (e.g., the processor 210-1 of FIG. 2). The instructions, when executed by the processor, may be configured to cause the wearable device to obtain, in a state displaying a media content (e.g., the media content 121 of FIG. 1) in a display area of the display, a frame (e.g., the frames 111 and 112 of FIG. 1) using the camera. The instructions, when executed by the processor, may be configured to cause the wearable device to identify, based on identifying a body part contacted to an external object in the frame, a shape of a grip of the body part with respect to the external object. The instructions, when executed by the processor, may be configured to cause the wearable device to change a distance of the media content displayed spaced apart from the wearable device by selecting one of a first distance (e.g., the first distance d1 of FIG. 1) or a second distance (e.g., the second distance d2 of FIG. 1) shorter than the first distance according to the shape of the grip. According to an embodiment, the wearable device may change a distance of the media content in the display area based on the shape of the grip.

For example, the instructions, when executed by the processor, may be configured to cause the wearable device to display a plurality of media contents (e.g., the media contents 121, 122, and 123 of FIG. 1) including the media content spaced apart from the wearable device along the first distance based on identifying the shape of the grip corresponding to a first shape of a grip.

For example, the instructions, when executed by the processor, may be configured to cause the wearable device to move one of the plurality of media contents from the first distance to the second distance in response to identifying a second shape of a grip different from the first shape of the grip while displaying the plurality of media contents based on the first distance. The instructions, when executed by the processor, may be configured to cause the wearable device to at least temporarily cease displaying other media contents distinguished from the media content moved based on the second distance.

For example, the instructions, when executed by the processor, may be configured to cause the wearable device to display the media content spaced apart from the wearable device along the second distance based on identifying the second shape of the grip distinguished from the first shape of the grip.

For example, the instructions, when executed by the processor, may be configured to cause the wearable device to move the media content displayed based on the second distance to a position of the external object included in the display area.

For example, the instructions, when executed by the processor, may be configured to cause the wearable device to display a visual object indicating a path on the media content based on the path of the external object identified through the camera while displaying the media content based on the second distance.

For example, the instructions, when executed by the processor, may be configured to cause the wearable device to change a distance of the media content by moving the media content along a direction perpendicular to the display area.

For example, the instructions, when executed by the processor, may be configured to cause the wearable device to display the media content using at least one of a depth value or a binocular parallax corresponding to the changed distance based on changing the distance of the media content.

For example, the instructions, when executed by the processor, may be configured to cause the wearable device to identify the shape of the grip in the frame, based on identifying the external object included in a preset category including a pen in the frame.

For example, the wearable device may comprise communication circuitry (e.g., the communication circuitry 240-1 of FIG. 2). The instructions, when executed by the processor, may be configured to cause the wearable device to, based on identifying a gesture to move the media content to an external electronic device included in the frame, transmit, to the external electronic device using the communication circuitry, information to display the media content in a display of the external electronic device.

For example, the wearable device may comprise communication circuitry. The instructions, when executed by the processor, may be configured to cause the wearable device to, based on identifying information with respect to a contact point of the external object with respect to an external electronic device, from the external electronic device (e.g., the external electronic device 201 of FIG. 2) connected through the communication circuitry, display a visual object indicating a path of the contact point overlappingly on the media content.

As described above, according to an embodiment, a method of a wearable device may comprise obtaining (e.g., the operation 510 of FIG. 5) a frame using a camera of the wearable device. The method may comprise identifying (e.g., the operation 520 of FIG. 5), based on identifying a body part contacted to an external object in the frame, a shape of a grip of the body part with respect to the external object. The method may comprise, based on identifying a first shape of a grip, displaying (e.g., the operation 540 of FIG. 5) a plurality of media contents according to a first distance corresponding to the first shape of the grip in a portion of the display area. The method may comprise, based on identifying a second shape of a grip distinguished from the first shape of the grip, displaying (e.g., the operation 560 of FIG. 5), one of the plurality of media contents using a second distance shorter than the first distance.

For example, displaying the plurality of media contents may comprise, based on identifying the second shape of the grip, moving a media content, among the plurality of media contents displayed at the first distance side-by-side, positioned at a center of a display area of the wearable device to the second distance. The method may comprise, based on identifying the second shape of the grip, at least temporarily ceasing the display of other media contents distinguished from the media content moved to the second distance.

For example, displaying the plurality of media contents may comprise displaying the plurality of media contents based on a binocular parallax corresponding to the first distance.

For example, displaying using the second distance may comprise moving the media content from an area including the second distance to a position in the display area mapped to a position of the external object identified in the frame.

For example, the identifying may comprise, based on identifying, from the frame, the external object included in a preset category, including a pen, identifying the shape of the grip in the frame.

As described above, according to an embodiment, a method of a wearable device may comprise obtaining a frame using the camera, in a state displaying a media content in a display area of the display of the wearable device. The method may comprise, identifying, based on identifying a body part contacted to an external object in the frame, a shape of a grip of the body part with respect to the external object. The method may comprise changing a distance of the media content displayed spaced apart from the wearable device by selecting one of a first distance or a second distance shorter than the first distance according to the shape of the grip.

For example, the moving may comprise displaying the plurality of media contents, including the media content, spaced apart from the wearable device along the first distance based on identifying the shape of the grip corresponding to a first shape of the grip.

For example, the moving may comprise moving one of the plurality of media contents from the first distance to the second distance in response to identifying a second shape of a grip different from the first shape of the grip while displaying the plurality media contents based on the first distance. The method may comprise at least temporarily ceasing to display other media contents distinguished from the media content moved based on the second distance.

For example, the moving may comprise displaying the media content spaced apart from the wearable device according to the second distance based on identifying the second shape of the grip distinguished from the first shape of the grip.

For example, the moving may comprise moving the media content displayed based on the second distance to a position of the external object included in the display area.

For example, the method may comprise, while displaying the media content based on the second distance, based on a path of the external object identified through the camera, displaying a visual object indicating the path on the media content.

For example, the moving may comprise changing a distance of the media content by moving the media content along a direction perpendicular to the display area.

For example, the moving may comprise, based on changing the distance of the media content, displaying the media content using at least one of a depth value or a binocular parallax corresponding to the changed distance.

For example, the identifying may comprise, based on identifying, from the frame, the external object included in a preset category, including a pen, identifying the shape of the grip in the frame.

For example, the method may comprise, based on identifying a gesture to move the media content to an external electronic device included in the frame, transmitting, to the external electronic device using communication circuitry of the wearable device, information to display the media content in a display of the external electronic device.

As described above, according to an embodiment, a wearable device (e.g., the wearable device 101 of FIGS. 1 to 11) may comprise a camera (e.g., the camera 225 of FIG. 2), a display (e.g., the display 220-1 of FIG. 2), memory (e.g., the memory 215-1 of FIG. 2) storing instructions, and a processor (e.g., the processor 210-1 of FIG. 2). The instructions, when executed by the processor, may be configured to cause the wearable device to obtain a frame using the camera. The instructions, when executed by the processor, may be configured to cause the wearable device to identify, based on identifying a body part contacted to an external object in the frame, a shape of a grip of the body part with respect to the external object. The instructions, when executed by the processor, may be configured to cause the wearable device to, based on identifying a first shape of a grip, display a plurality of media contents (e.g., the media contents 121, 122, and 123 of FIG. 1) according to a first distance (e.g., the first distance d1 of FIG. 1) corresponding to the first shape of the grip in a portion of the display area. The instructions, when executed by the processor, may be configured to cause the wearable device to, based on identifying a second shape of a grip distinguished from the first shape of the grip, display, one of the plurality of media contents using a second distance (e.g., the second distance d2 of FIG. 1) shorter than the first distance.

For example, the instructions, when executed by the processor, may be configured to cause the wearable device to, based on identifying the second shape of the grip, move, a media content, among the plurality of media contents displayed at the first distance side-by-side, positioned at a center of the display area to the second distance. The instructions, when executed by the processor, may be configured to cause the wearable device to, based on identifying the second shape of the grip, at least temporarily cease to display other media contents distinguished from the media content moved to the second distance.

For example, the instructions, when executed by the processor, may be configured to cause the wearable device to, based on a binocular parallax corresponding to the first distance, display the plurality of media contents.

For example, the instructions, when executed by the processor, may be configured to cause the wearable device to move the media content from an area including the second distance to a position in the display area mapped to a position of the external object identified in the frame.

As described above, according to an embodiment, a wearable device may comprise a camera, displays respectively facing two eyes of a user wearing the wearable device, memory storing instructions, and a processor. The instructions, when executed by the processor, may be configured to cause the wearable device to obtain, in a state displaying a media content in the displays, a frame using the camera. The instructions, when executed by the processor, may be configured to cause the wearable device to identify, based on identifying a body part contacted to an external object in the frame, a shape of a grip of the body part with respect to the external object. The instructions, when executed by the processor, may be configured to cause the wearable device to change, to display the media content at a distance corresponding to the identified shape of the grip, positions and sizes of the media content respectively displayed in the displays.

For example, the instructions, when executed by the processor, may be configured to cause the wearable device to determine whether a hand included in the body part, that is detected using the frame, has a preset shape of a grip grabbing an end of the external object with a shape of a pen. The instructions, when executed by the processor, may be configured to cause the wearable device to display, based on detecting the hand having the preset shape of the grip, a plurality of media contents including the media content.

For example, the instructions, when executed by the processor, may be configured to cause the wearable device to, while displaying the plurality of media contents having positions and sizes in the displays associated with the first distance, identify another preset shape of a grip of the hand different from the preset shape of the grip. The instructions, when executed by the processor, may be configured to cause the wearable device to, based on detection of the hand having the another preset shape of the grip, change positions and sizes in each of the displays of one of the plurality of media contents to display one of the plurality of media contents at the second distance shorter than the first distance. The instructions, when executed by the processor, may be configured to cause the wearable device to at least temporarily cease to display the other media contents distinguished from the media content displayed at the second distance.

For example, the instructions, when executed by the processor, may be configured to cause the wearable device to determine whether a hand included in the body part, that is detected using the frame, has a preset shape of a grip to draw handwritings. The instructions, when executed by the processor, may be configured to cause the wearable device to, based on detection of the hand having the preset shape of the grip, change the positions and the sizes of the media content displayed in each of the displays to display the media content at a distance shorter than or equal to a distance reachable by the hand.

For example, the instructions, when executed by the processor, may be configured to cause the wearable device to change, to move the media content to a position of the external object viewable through the display, positions or sizes of the media content displayed in the displays.

For example, the instructions, when executed by the processor, may be configured to cause the wearable device to, based on a path of the external object identified through the camera, display a visual object indicating the path on the media content.

For example, the instructions, when executed by the processor, may be configured to cause the wearable device to determine whether a plurality of hands, which are detected using the frame, have a preset shape of a grip grabbing both ends of the external object with a shape of a pen. The instructions, when executed by the processor, may be configured to cause the wearable device to, based on detection of the plurality of hands having the preset shape of the grip, detect a direction of the external object tilted by the plurality of hands. The instructions, when executed by the processor, may be configured to cause the wearable device to change the positions and the sizes of the media content displayed in each of the displays according to the detected direction.

For example, the instructions, when executed by the processor, may be configured to cause the wearable device to, based on changing the distance of the media content, display the media content using at least one of a depth value or a binocular parallax corresponding to the changed distance.

For example, the instructions, when executed by the processor, may be configured to cause the wearable device to, based on identifying, from the frame, the external object included in a preset category including an object having a shape extended to a direction, including a pen, identify the shape of the grip in the frame.

For example, the wearable device may comprise communication circuitry. The instructions, when executed by the processor, may be configured to cause the wearable device to, based on identifying a gesture to move the media content to an external electronic device included in the frame, transmit, to the external electronic device using the communication circuitry, information to display the media content in a display of the external electronic device.

For example, the instructions, when executed by the processor, may be configured to cause the wearable device to, based on identifying information with respect to a contact point of the external object with respect to an external electronic device, from the external electronic device connected through the communication circuitry, display a visual object indicating a path of the contact point overlappingly on the media content.

As described above, in an embodiment, a method of a wearable device may be provided. The method may comprise obtaining a frame using a camera of the wearable device. The method may comprise identifying, based on identifying a body part contacted to an external object in the frame, a shape of a grip of the body part with respect to the external object. The method may comprise, based on identifying a first shape of a grip, adjusting, to display a plurality of media contents according to a first distance corresponding to the first shape of the grip, positions and sizes of the plurality of media contents displayed in each of displays respectively facing two eyes of a user wearing the wearable device. The method may comprise, based on identifying a second shape of a grip distinguished from the first shape of the grip, adjusting, to display one of the plurality of media contents using a second distance shorter than the first distance, positions and sizes of a media content displayed in each of the displays.

For example, the adjusting the positions and the sizes to display the plurality of media contents may comprise identifying whether a hand included in the body part has the second shape of the grip to draw handwritings. The adjusting the positions and the sizes to display the plurality of media contents may comprise, based on detection of the hand having the second shape of the grip, adjusting, to move a media content, among the plurality of media contents displayed at the first distance side-by-side, positioned at a center of a display area of the wearable device to the second distance, positions and sizes of the media content. The adjusting the positions and the sizes to display the plurality of media contents may comprise, based on identifying the second shape of the grip, at least temporarily ceasing to display other media contents distinguished from the media content moved to the second distance.

For example, the adjusting the positions and the sizes to display the plurality of media contents may comprise, based on a binocular parallax corresponding to the first distance, determining sizes and distances of the plurality of media contents displayed in each of the displays.

As described above, in an embodiment, a non-transitory computer readable storage media including instructions may be provided. The instructions, when executed by a processor of a wearable device including a camera and displays respectively facing two eyes of a user wearing the wearable device, may cause the wearable device to obtain, in a state displaying a media content in the displays, a frame using the camera. The instructions, when executed by the processor, may cause the wearable device to identify, based on identifying a body part contacted to an external object in the frame, a shape of a grip of the body part with respect to the external object. The instructions, when executed by the processor, may cause the wearable device to change, to display the media content at a distance corresponding to the identified shape of the grip, positions and sizes of the media content respectively displayed in the displays.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. A wearable device, comprising:
a camera;
display respectively facing two eyes of a user wearing the wearable device;
memory storing instructions; and
a processor, wherein the instructions, when executed by the processor, cause the wearable device to:
obtain, in a state displaying a media content in the displays, a frame using the camera;
identify, based on identifying a body part contacted to an external object in the frame, a shape of a grip of the body part with respect to the external object; and
change, to display the media content at a distance corresponding to the identified shape of the grip, positions and sizes of the media content respectively displayed in the displays.

2. The wearable device of claim 1, wherein the instructions, when executed by the processor, cause the wearable device to:
determine whether a hand included in the body part, that is detected using the frame, has a preset shape of a grip grabbing an end of the external object with a shape of a pen; and
display, based on detection of the hand having the preset shape of the grip, a plurality of media contents including the media content.

3. The wearable device of claim 2, wherein the instructions, when executed by the processor, cause the wearable device to:
while displaying the plurality of media contents having positions and sizes in the displays associated with the first distance, another preset shape of a grip of the hand different from the preset shape of the grip;
based on detection of the hand having the another preset shape of the grip, change positions and sizes in each of the displays of one of the plurality of media contents to display one of the plurality of media contents at the second distance shorter than the first distance; and
at least temporarily cease to displaying the another media content distinguished from the media content displayed at the second distance.

4. The wearable device of claim 1, wherein the instructions, when executed by the processor, cause the wearable device to:
determine whether a hand included in the body part, that is detected using the frame, has a preset shape of a grip to draw handwritings; and
based on detection of the hand having the preset shape of the grip, change the positions and the sizes of the media content displayed in each of the displays to display the media content at a distance shorter than or equal to a distance reachable by the hand.

5. The wearable device of claim 4, wherein the instructions, when executed by the processor, cause the wearable device to:
change, to move the media content to a position of the external object viewable through the display, positions or sizes of the media content displayed in the displays.

6. The wearable device of claim 4, wherein the instructions, when executed by the processor, cause the wearable device to:
based on a path of the external object identified through the camera, display a visual object indicating the path on the media content.

7. The wearable device of claim 1, wherein the instructions, when executed by the processor, cause the wearable device to:
determine whether a plurality of hands, which are detected using the frame, have a preset shape of a grip grabbing both ends of the external object with a shape of a pen;
based on detection of the plurality of hands having the preset shape of the grip, detect a direction of the external object tilted by the plurality of hands; and
change the positions and the sizes of the media content displayed in each of the displays according to the detected direction.

8. The wearable device of claim 1, wherein the instructions, when executed by the processor, cause the wearable device to:
based on changing the distance of the media content, display the media content using at least one of a depth value or a binocular parallax corresponding to the changed distance.

9. The wearable device of claim 1, wherein the instructions, when executed by the processor, cause the wearable device to:
based on identifying, from the frame, the external object included in a preset category including an object having a shape extended to a direction, including a pen, identify the shape of the grip in the frame.

10. The wearable device of claim 1, further comprising communication circuitry,
wherein the instructions, when executed by the processor, cause the wearable device to:
based on identifying a gesture to move the media content to an external electronic device including the frame, transmit, to the external electronic device using the communication circuitry, information to display the media content in a display of the external electronic device.

11. The wearable device of claim 1, further comprising communication circuitry,
wherein the instructions, when executed by the processor, cause the wearable device to:
based on identifying information with respect to a contact point of the external object with respect to the external electronic device, from an external electronic device connected through the communication circuitry, display a visual object indicating a path of the contact point overlappingly on the media content.

12. A method of a wearable device, comprising:
obtaining a frame using a camera of the wearable device;
identifying, based on identifying a body part contacted to an external object in the frame, a shape of a grip of the body part with respect to the external object;
based on identifying a first shape of a grip, adjusting, to display a plurality of media contents according to a first distance corresponding to the first shape of the grip, positions and sizes of the plurality of media contents displayed in each of displays respectively facing two eyes of a user wearing the wearable device; and
based on identifying a second shape of a grip distinguished from the first shape of the grip, adjusting, to display one of the plurality of media contents using a second distance shorter than the first distance, positions and sizes of a media content displayed in each of the displays.

13. The method of claim 12, wherein the adjusting the positions and the sizes to display the plurality of media contents comprising:
identifying whether a hand included in the body part has the second shape of the grip to draw handwritings;
based on detection of the hand having the second shape of the grip, adjusting, to move a media content, among the plurality of media contents displayed at the first distance side-by-side, positioned at center of a displaying area of the wearable device to the second distance, positions and sizes of the media content; and
based on identifying the second shape of the grip, at least temporarily ceasing to display another media content distinguished from the media content moved to the second distance.

14. The method of claim 12, wherein the adjusting the positions and the sizes to display the plurality of media contents comprising:
based on a binocular parallax corresponding to the first distance, determining sizes and distances of the plurality of media contents displayed in each of the displays.

15. A non-transitory computer readable storage media storing instructions, wherein the instructions, when executed by a processor of a wearable device including a camera and displays respectively facing two eyes of a user wearing the wearable device, cause the wearable device to:
obtain, in a state displaying a media content in the displays, a frame using the camera;
identify, based on identifying a body part contacted to an external object in the frame, a shape of a grip of the body part with respect to the external object; and
change, to display the media content at a distance corresponding to the identified shape of the grip, positions and sizes of the media content respectively displayed in the displays.
